# FASCICULE DE BREVET EUROPEEN

(11) **EP 1 308 909 B1**
(45) Date de publication et mention de la délivrance du brevet: **27.02.2013**
(21) Numéro de dépôt: 02292756.0
(22) Date de dépôt: 05.11.2002
(51) Int. Cl.: G07C 9/00, G07F 7/08, G07F 7/10, G07F 17/00

(54) **Procédé de génération de données pseudo-aléatoires dans une carte à puce, et procédé d'authentification et son système**
Verfahren zum Erzeugen von Pseudo-Zufallsdaten in einer Chipkarte und dazugehöriges Authentifizierungsverfahren und -system
Method for generating pseudo-random data in a chipcard, and associated authentication method and system

(30) Priorité: 06.11.2001 FR 0114351
(43) Date de publication de la demande: 07.05.2003
(73) Titulaire: COMPAGNIE INDUSTRIELLE ET FINANCIERE D'INGENIERIE (INGENICO), 75015 Paris (FR)
(72) Inventeur: Deborgies, Luc, 92320 Chatillon (FR); Choiset, Bruno, 78640 Villiers St Frederic (FR)
(74) Mandataire: Debay, Yves

(56) Documents cités:
- EP-A- 0 281 057
- EP-A- 0 532 231
- EP-A- 0 880 115
- WO-A-96/10811
- FR-A- 2 680 263
- US-A- 5 513 245
- US-A- 5 613 214

## Description

La présente invention concerne un procédé de génération de données imprévisibles par un objet comportant des capacités de traitements de données. L'invention concerne en particulier un tel procédé permettant à un objet disposant de telles capacités, par exemple comprenant une carte à puce ou un module d'identité, de disposer de données imprévisibles pour son utilisateur, ces données pouvant être identiques pour plusieurs objets informatisés similaires. L'invention concerne également un procédé et un système de contrôle d'un parc de tels objets, ces objets pouvant servir à authentifier des personnes ou à réaliser un décompte de crédit de temps ou de crédit d'autre nature, ou à mettre en oeuvre des jeux multi joueurs comportant une part aléatoire commune aux participants, ou un contrôle d'utilisation d'un autre dispositif ou système.

Il est connu par l'art antérieur des procédés utilisant des algorithmes capables de générer des données apparemment aléatoires, en particulier à partir d'une donnée de base dite graine (« seed » en anglais). Ces algorithmes permettent ainsi de fournir des données qui ne sont pas prévisibles sans la connaissance de la donnée graine, et présentent une répartition de valeurs répondant approximativement à des normes de distribution aléatoires.

De telles données imprévisibles ou pseudo-aléatoires peuvent être utilisées pour simuler un tirage aléatoire, par exemple pour programmer dans un ordinateur des jeux utilisant une part de hasard. Ce peut être le cas pour des jeux vidéo ou informatiques pour remplacer un lancer de dés. Cela peut permettre de réaliser un jeu de type loterie réunissant plusieurs utilisateurs d'un même ordinateur, ou des utilisateurs d'ordinateurs reliés entre eux.

De telles données pseudo-aléatoires peuvent être utilisées pour fournir dans des programmes quelconques des évènements ne présentant pas de corrélation apparente avec des évènements au sein du programme ou des actions de l'utilisateur. Il peut s'agir de générer des événements aléatoires dans un programme de simulation, par exemple pour générer des conditions météorologiques ou des incidents à gérer.

Il peut également s'agir d'authentifier un ordinateur en vérifiant qu'il comporte bien une version déterminée d'un tel algorithme, ou une clé déterminée comportant une donnée utilisable dans un tel algorithme. Cette vérification peut alors se faire en communiquant une telle donnée graine à cet ordinateur et en lui demandant de calculer une donnée pseudo-aléatoire, dite signature, par un tel algorithme. Un tel algorithme peut en particulier comporter l'utilisation d'une clé déterminée. En comparant la signature calculée par l'ordinateur à authentifier avec une signature de contrôle calculée par un ordinateur de référence ou de contrôle possédant le même algorithme et la même clé, il est ainsi possible de vérifier que l'ordinateur comporte bien ces informations sans avoir à dévoiler ces mêmes informations.

Le brevet US 5361062 enseigne par exemple un dispositif portable d'identification d'une personne. Ce dispositif génère un code pseudo aléatoire à partir d'un code individuel identifiant cette personne, en combinant ce code individuel avec une donnée extraite d'une horloge embarquée dans le dispositif.

Le brevet WO 91 06926 enseigne également d'effectuer un contrôle d'identification de personne, en déclenchant cette génération de code pseudo-aléatoire par un signal reçu par le dispositif. Ce signal est alors émis directement par la station de contrôle et constitue un simple signal de déclenchement du dispositif porté par la personne à identifier.

Ces procédés présentent toutefois l'inconvénient qu'ils ne peuvent générer des données pseudo-aléatoires qui soient les mêmes dans plusieurs objets informatisés similaires que dans certaines conditions de coordination. Ces objets doivent par exemple être connectés entre eux à un moment donné pour pouvoir recevoir la même donnée graine. Dans le cas contraire, ces objets peuvent fournir des données pseudo-aléatoires en se basant sur une donnée graine commune, fournie par une horloge initialement commune, qui maintient une synchronisation entre eux. Ces objets doivent alors toutefois comporter une fonction d'horloge qui soit en permanence en fonctionnement. Un tel fonctionnement continu pose des problèmes d'énergie qui limitent l'autonomie et l'encombrement d'un tel objet. Il nécessite également que la synchronisation dans le temps reste parfaite entre tous les objets concernés, ce qui peut être difficile à obtenir sur une grande durée et pour un grand nombre d'objets.

Dans cet esprit, le brevet AU 6568686 enseigne d'ailleurs un procédé permettant de re-synchroniser un tel dispositif en cours d'utilisation.

La présente invention a donc pour objet de pallier les inconvénients de l'art antérieur en proposant un procédé permettant à une pluralité d'objets informatisés dotés de capacités de traitement de données de générer des données pseudo-aléatoires qui soient identiques d'un objet à l'autre sans nécessiter de communication entre eux.

Ce but est atteint par un procédé de génération d'une donnée pseudo-aléatoire par un objet informatisé comportant des moyens de traitement de données, des moyens de mémorisation, ainsi que des moyens d'affichage ou des moyens de communication avec un dispositif de traitement de données dit terminal, ce terminal permettant la génération de la donnée pseudo-aléatoire à partir d'une donnée graine, sans arrêt différente, fournie par la réception d'un signal extérieur, et le calcul par cet objet informatisé d'une donnée numérique pseudo-aléatoire, dite signature, à partir de ce signal, à l'aide d'un algorithme mémorisé dans cet objet, caractérisé en ce que ce calcul s'effectue lors de la réception du signal extérieur, par au moins un objet informatisé ou par au moins un terminal, ce signal variant au cours du temps et étant diffusé, indépendamment de l'état de fonctionnement de l'objet informatisé, dans une zone déterminée et pouvant être reçu ou interprété de façon identique par d'autres objets ou terminaux dans des emplacements différents de cette même zone.

Selon une particularité, le signal est un signal radio, c'est-à-dire utilisant des ondes électro-magnétiques, émis par un émetteur de diffusion, le procédé comportant en outre les étapes suivantes :
- réception du signal radio par le terminal;
- extraction de données de signal à partir de ce signal radio ;
- transmission de ces données de signal à l'objet informatisé.

Selon une particularité, le signal radio représente des informations comportant des caractéristiques irrégulières ou non prévisibles.

Selon une particularité, le signal radio est reçu par la lecture d'une onde sous-porteuse, associée à une diffusion d'ondes radiophoniques.

Selon une particularité, le signal comporte l'émission, pendant une pluralité de périodes de temps déterminées, d'une information constante ou interprétable de façon constante à l'intérieur de chacune de ces périodes déterminées, cette information variant d'une de ces périodes à une autre d'une façon irrégulière ou non prévisible.

Un autre but est de proposer un procédé d'authentification d'un objet informatisé doté de capacités de traitement de données ou de contrôle de sa validité.

Ce but est atteint par un procédé de contrôle d'un objet informatisé, cet objet informatisé comportant des moyens de traitement de données, des moyens de mémorisation, ainsi que des moyens d'affichage ou des moyens de communication avec un dispositif de traitement de données dit terminal, caractérisé en ce qu'il comporte les étapes suivantes :
- génération d'une donnée pseudo-aléatoire, dite signature, par cet objet informatisé en utilisant un procédé tel que décrit ci-dessus ;
- affichage de cette signature, ou transmission de cette signature au terminal, pour vérification par rapport à une donnée calculée par un autre appareil à partir du même signal numérique ou analogique, cette vérification pouvant être faite dans le terminal ou en dehors.

Selon une particularité, le procédé comporte une étape de comparaison vérifiant la valeur d'une donnée, dite donnée de validité, mémorisée dans l'objet informatisé, cette vérification conditionnant ou modifiant le calcul, l'affichage ou la transmission de la signature.

Selon une particularité, le procédé comporte une étape d'affichage, sur des moyens d'affichage du terminal, de la signature reçue par le terminal depuis l'objet informatisé.

Selon une particularité, la signature est calculée par l'objet informatisé par un algorithme, dit algorithme de signature, utilisant au moins une donnée, dite clé de calcul.

Selon une particularité, la clé de calcul est calculée à partir d'une donnée, dite clé de base, mémorisée dans l'objet informatisé.

Selon une particularité, plusieurs données, dites clés de base multiples, sont mémorisées dans l'objet informatisé, le procédé comportant une étape de saisie d'une donnée représentant, parmi ces clés de base multiples, la donnée à utiliser comme clé de base.

Selon une particularité, le procédé comporte une étape de personnalisation de l'objet informatisé par saisie d'au moins une donnée, dite donnée individuelle, cette donnée individuelle étant utilisée par l'objet informatisé en combinaison avec la clé de base pour calculer une donnée, dite clé fille, qui sera utilisée comme clé de calcul.

Selon une particularité, le procédé comporte une étape de saisie et mémorisation dans l'objet informatisé d'au moins une donnée, dite paramètre supplémentaire, l'algorithme de signature combinant ce paramètre supplémentaire avec la clé de calcul et les données de signal pour calculer la signature.

Selon une particularité, le procédé comporte une étape utilisant un algorithme, dit algorithme complémentaire, réalisant l'extraction de la donnée individuelle qui a été utilisée pour générer une signature, dite signature individualisée, en comparant cette signature individualisée avec une signature, dite signature de base, qui a été générée en combinant les mêmes données sauf ladite donnée individuelle.

Un autre but est de proposer un procédé d'authentification d'un parc d'objets informatisés dotés de capacités de traitement de données ou de contrôle de leur validité.

Ce but est atteint par un procédé d'authentification d'un ou plusieurs objets, ou de leur validité, ces objets appartenant à un parc d'objets distribués à des utilisateurs et mettant en oeuvre un procédé tel que décrit ci-dessus, caractérisé en ce qu'il comporte les étapes suivantes :
- activation dans une station de traitement de données, dite station de contrôle, d'un algorithme de contrôle reproduisant les résultats de l'algorithme de signature mémorisé dans les objets à authentifier,
- mémorisation éventuelle, dans la station de contrôle, d'une donnée représentant la clé de base mémorisée dans les objets à authentifier, ou celle des clés de base multiples devant être utilisée comme clé de base ;
- mémorisation éventuelle, dans la station de contrôle, d'au moins une donnée représentant les paramètres supplémentaires devant être mémorisés dans les objets à authentifier ;
- pour chaque objet à authentifier utilisant une donnée individuelle, lecture ou réception en provenance de l'objet d'une donnée représentant la donnée individuelle et mémorisation de cette donnée individuelle dans la station de contrôle ;
- calcul par la station de contrôle, à l'aide de l'algorithme de contrôle, d'une donnée, dite signature de contrôle, en fonction des données éventuellement mémorisées plus haut ;
- lecture ou réception de la signature calculée par un objet à authentifier et vérification de cette même signature par rapport à la dernière signature de contrôle obtenue par la station de contrôle, ou avec une précédente signature de contrôle.

Selon une particularité, la donnée individuelle mémorisée dans l'objet informatisé ne peut être modifiée que dans des conditions déterminées, le procédé comportant en outre les étapes suivantes :
- calcul par l'objet informatisé et transmission au terminal d'une signature de base sans utilisation de la donnée individuelle ;
- calcul par l'objet informatisé et transmission au terminal d'une signature individualisée avec utilisation de la donnée individuelle ;
- affichage de ces signatures, ou transmission de ces signatures au terminal, pour vérification par rapport à au moins une donnée calculée par un autre appareil à partir du même signal numérique ou analogique, cette vérification pouvant être faite dans le terminal ou en dehors.

Selon une particularité, la station de contrôle comporte un algorithme complémentaire le procédé comportant en outre les étapes suivantes :
- mémorisation dans la station de contrôle d'une signature individualisée fournie par l'objet informatisé ;
- extraction dans la station de contrôle, par l'algorithme complémentaire, de la donnée individuelle utilisée par l'objet informatisé pour générer la signature individualisée, pour comparaison avec une identification fournie ou présentée par l'utilisateur, ou l'objet informatisé, ou le terminal, ou un dispositif ou lieu incluant ou utilisant cet objet informatisé.

Un autre but est de proposer un objet informatisé permettant de mettre en oeuvre un des procédés décrits ci-dessus.

Un autre but est de proposer un procédé de contrôle d'un parc d'objets informatisé de décompte de crédit de temps dont l'authenticité et la validité peuvent être facilement contrôlées, par exemple par lecture optique.

Ce but est atteint par un procédé de contrôle d'un parc d'objets de décompte de crédit de temps, caractérisé en ce qu'il utilise des d'objets informatisés mettant en oeuvre un procédé selon l'une des revendications précédentes, ces objets informatisés d'une part mémorisant une donnée de solde, représentant une valeur de crédit de temps disponible et un programme incluant un algorithme de décompte apte à modifier cette donnée de solde, et d'autre part comportant une donnée de validité présentant un état déterminé lorsque l'algorithme de décompte est activé et que la donnée de solde représente un crédit de temps non nul, cette modification de la donnée de solde se faisant en fonction d'une ou plusieurs durées d'activation de l'objet ; ce procédé comportant les étapes suivantes :
- distribution à des utilisateurs de tels objets informatisés ;
- authentification et contrôle de la validité d'un ou plusieurs de ces objets informatisés, à l'aide d'une station de contrôle selon l'une des revendications précédentes, ces objets informatisés étant présentés par les utilisateurs ou accessibles pour contrôle.

Selon une particularité, la modification de la donnée de solde se fait également en fonction de données représentant une donnée individuelle, un paramètre supplémentaire, un choix de clé de base, ou une combinaison de ces éléments.

Un autre but est de proposer un système mettant en oeuvre un des procédés décrits ci-dessus pour contrôler un parc d'objets informatisés de décompte de crédit de temps ou d'un autre type.

Un autre but de l'invention est de proposer un procédé permettant de contrôler l'utilisation d'un dispositif, système, ou logiciel, en vérifiant que l'utilisateur dispose bien d'un objet informatisé déterminé qui soit authentique, valide, activé, ou fonctionnant selon des paramètres déterminés.

Ce but est atteint par un procédé de contrôle d'utilisation d'un dispositif ou d'un système comportant ou utilisant un programme informatique, dit application protégée, caractérisé en ce qu'au moins une partie de l'application protégée est exécutée dans un objet informatisé mettant en oeuvre un procédé selon l'une des revendications précédentes, ou utilise un programme exécuté dans ce même objet informatisé, le calcul de la signature ou son affichage par l'objet informatisé ou sa transmission au terminal ne s'effectuant que si l'application protégée est active.

Un autre but est de proposer un système mettant en oeuvre le procédé décrit ci-dessus pour contrôler l'utilisation d'un dispositif, système, ou logiciel.

Un autre but est de réaliser le contrôle d'un parc d'objets informatisés de décompte de valeur de stationnement.

Ce but est atteint par l'utilisation d'un procédé tel que décrit ci-dessus pour contrôler des titres de droit de stationnement de véhicules, caractérisé en ce que les objets informatisés sont des cartes à puces, prépayées ou à crédit, dont une donnée de solde représente une valeur de temps de stationnement.

Selon une particularité, au moins un paramètre supplémentaire correspond à une zone géographique de stationnement ou à un type de tarification ou une combinaison des deux.

Selon une particularité, au moins une donnée individuelle correspond à une donnée identifiant l'objet informatisé ou à une donnée identifiant un véhicule ou un utilisateur ou un compte utilisateur, ou une combinaison de ces éléments.

L'invention, avec ses caractéristiques et avantages, ressortira plus clairement à la lecture de la description faite en référence aux dessins annexés dans lesquels :

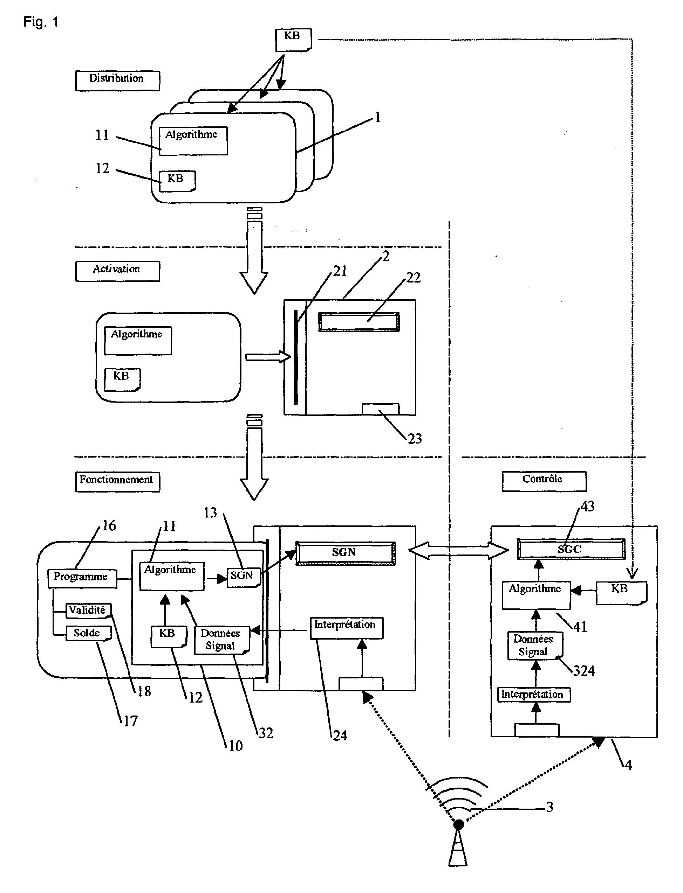

- la figure 1 représente un schéma symbolique de mise en oeuvre d'un procédé selon l'invention dans un mode de réalisation réalisant l'authentification d'un parc de cartes à puce de décompte de temps fonctionnant avec une clé de base unique et permanente ;

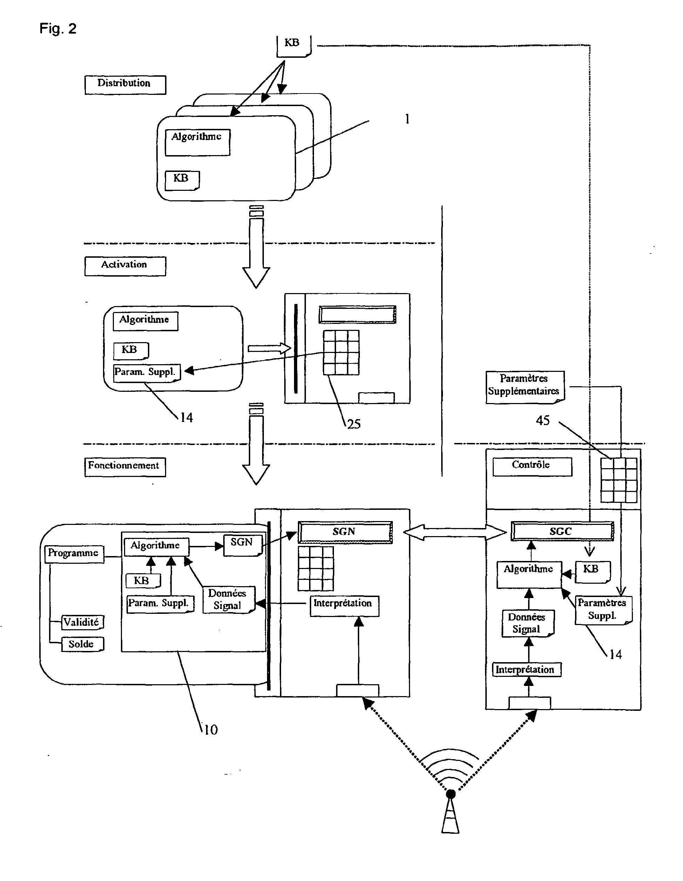

- la figure 2 représente un schéma symbolique de mise en oeuvre d'un procédé selon l'invention dans un mode de réalisation réalisant l'authentification d'un parc de cartes à puce de décompte de temps selon une variante intégrant des paramètres supplémentaires pouvant correspondre à plusieurs types d'usage d'une même carte ;

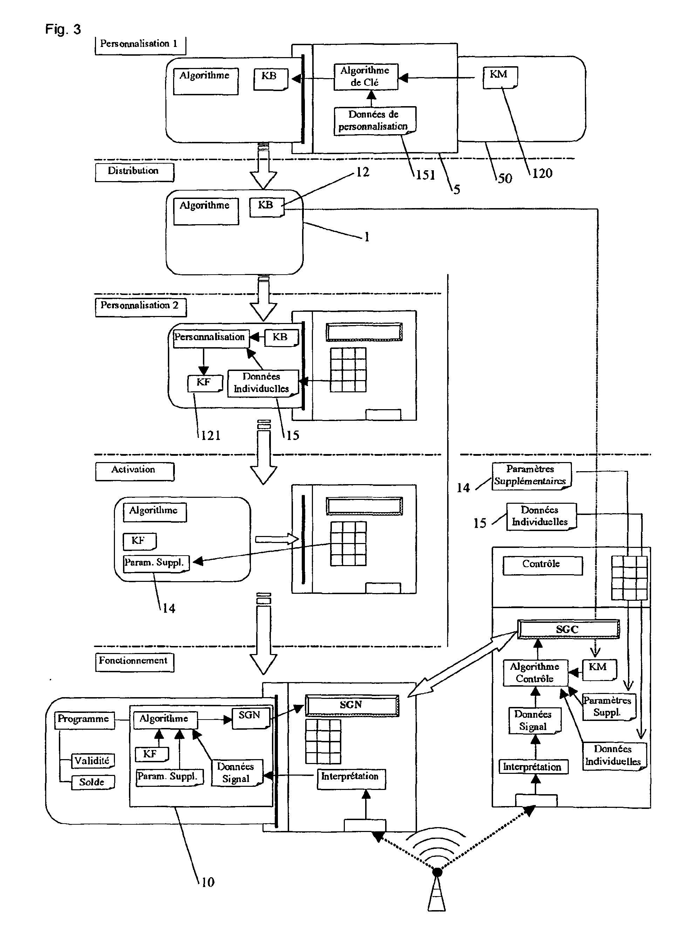

- la figure 3 représente un schéma symbolique de mise en oeuvre d'un procédé selon l'invention dans un mode de réalisation réalisant l'authentification d'un parc de cartes à puce de décompte de temps selon une variante intégrant des paramètres supplémentaires pouvant correspondre à plusieurs types d'usage d'une même carte, chaque carte pouvant être personnalisée par l'utilisateur avant usage.

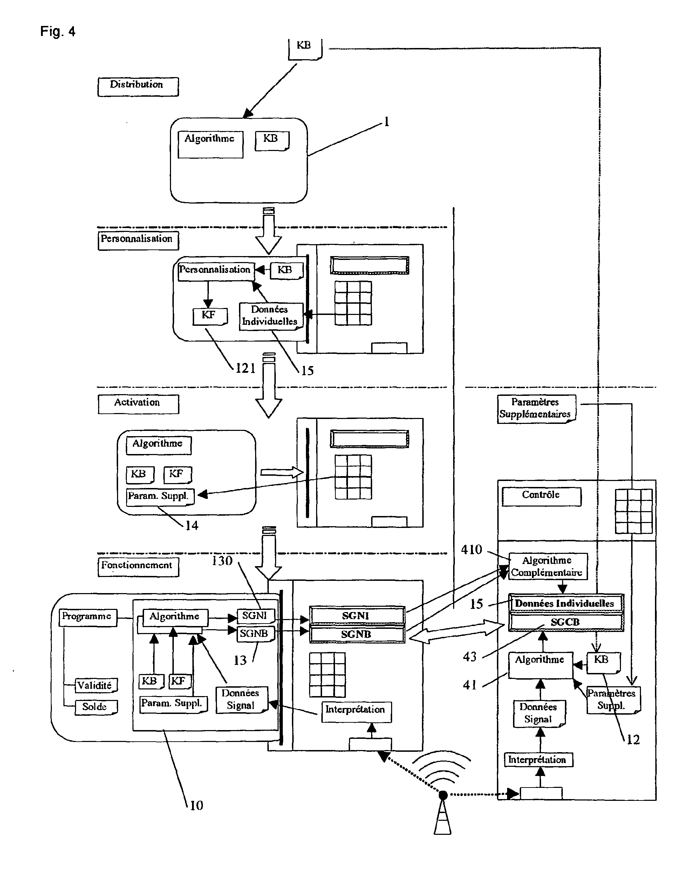

- la figure 4 représente un schéma symbolique de mise en oeuvre d'un procédé selon l'invention dans un mode de réalisation réalisant l'authentification d'un parc de cartes à puce de décompte de temps selon une variante intégrant des paramètres supplémentaires pouvant correspondre à plusieurs types d'usage d'une même carte, chaque carte pouvant être personnalisée par l'utilisateur avant usage, cette personnalisation pouvant être contrôlée indépendamment de la validité.

Dans la présente description, l'invention sera principalement illustrée dans des modes de réalisation utilisant des objets informatisés constitués de ou comprenant une carte à puce (« smartcard » en anglais), dans une quelconque des versions et environnements de fonctionnement disponibles pour ce type d'objet informatisé. Une telle carte à puce comprend ainsi au moins un processeur, des moyens de mémorisation, et des moyens de communication avec un appareil extérieur, dénommé par exemple terminal ou lecteur de carte.

Une telle carte à puce se prête particulièrement bien à un grand nombre d'applications du fait de son coût et encombrement réduit, entre autre du fait que son fonctionnement est en quelque sorte passif. C'est-à-dire qu'elle ne fonctionne qu'avec l'énergie d'un terminal et quand elle lui est reliée. Elle est en état de fonctionnement « suspendu » entre deux connections. Cet aspect passif et son absence de consommation énergétique induisent toutefois un certain nombre de contraintes, que l'invention permet de contourner dans un certain nombre d'applications.

Des objets informatisés, portables ou non, présentant certaines caractéristiques ou contraintes différentes de la carte à puce classique peuvent toutefois avantageusement utiliser la présente invention, par exemple pour des raisons d'autonomie, de simplicité de mise en oeuvre, de coût de mise en oeuvre. Il peut s'agir par exemple de boîtiers incorporant également des moyens d'affichage ou de saisie plus ou moins sommaires, de modules intégrant la mise en oeuvre de l'invention parmi d'autres fonctions, sous des formes physiques et électroniques variées.

Il doit donc être bien compris que le ou les objets comportant des capacités de traitement de données désignés comme objets informatisés dans la présente description peuvent présenter des configurations très différentes de la carte à puce ici illustrée, sans sortir de l'esprit de l'invention. Il peut en particulier s'agir d'objets qui sont physiquement solidaires d'objets ou dispositifs importants ou volumineux ou incorporés à de tels dispositifs. De tels objets peuvent par exemple ne pas être portables, mais bénéficier d'une autonomie de fonctionnement importante par rapport au dispositif auquel ils se rapportent, et réalisent à sa demande des tâches complètes et avec des ressources dont la faible ampleur pourrait leur permettre d'être réalisés sous une forme portable.

En ce sens, il faut considérer que les objets informatisés auxquels s'appliquent la présente description incluent des dispositifs de traitement de données de faibles capacités tels qu'habituellement désignés par le terme « d'informatique embarquée », souvent utilisé pour traduire le terme anglais de « embedded computer », c'est-à-dire « ordinateur enfoui », ou « incorporé ». Une telle présentation de l'étendue des dispositifs relevant de l'informatique embarquée peut être trouvée par exemple dans l'ouvrage « Java embarqué » (Eyrolles - Paris 1999).

Selon les applications, l'invention pourra être utilisée dans un mode de réalisation présentant différentes répartitions des fonctions décrites ci-dessous, en un ou plusieurs objets séparés ou séparables.

Ces fonctionnalités pourront en particulier être réparties selon les configurations suivantes, qui seront décrites plus complètement par la suite :
- « Module complet » : chaque objet informatisé comprend à la fois les algorithmes et données nécessaires, et des moyens d'interfaces avec l'extérieur.
- « Objet informatisé complet et passif » : chaque objet informatisé comprend les algorithmes et données nécessaires, ainsi que des moyens de calculs et de mémorisation. De tels objets sont utilisés avec un terminal qui comprend des moyens d'interface avec l'extérieur.
- « Objet informatisé multiple » : chaque objet informatisé est composé de plusieurs objets ne comprenant chacun qu'une part des algorithmes et données nécessaires. Un ou plusieurs de ces objets comprennent tout ou partie des moyens d'interface avec l'extérieur.

Dans le cas d'un objet informatisé « passif », pour pouvoir être activé et utilisé, un tel objet doit être connecté à un appareil ou terminal disposant de moyens d'interfaces avec l'utilisateur. L'objet informatisé ne peut alors communiquer que de manière purement électronique avec l'extérieur, avec ce terminal. Cette communication se fait par exemple suivant un protocole tel que le format « APDU » dans le cas d'une carte à puce répondant à la norme ISO 7816.

La séparation des tâches entre le terminal et la carte à puce fait que les fonctions spécifiques à une utilisation et les fonctions de sécurité qui vont avec sont mémorisées et traitées entièrement à l'intérieur de la carte, le terminal ne servant que d'intermédiaire. Du fait du faible coût de la carte en elle-même, nombres d'applications sont possibles qui dépendent directement de la carte, celle-ci étant l'élément sécurisé et renfermant la valeur d'usage de l'application. Le terminal n'est alors qu'un outil interchangeable, et les applications envisageables peuvent alors comporter des nombres importants de cartes à puces à la fois sécurisées et à faibles coûts, de la même façon que pour les cartes de téléphones, les diverses cartes bancaires, ou toutes sortes de cartes de fidélité ou autres.

Pour obtenir la génération de données imprévisibles pour l'utilisateur d'une carte à puce, il est possible d'utiliser un algorithme, dit algorithme de signature, comportant un algorithme pseudo-aléatoire, en lui fournissant une donnée graine. En particulier pour des applications comportant un nombre important de cartes produites, il est important de fournir à cet algorithme de signature une donnée graine qui soit toujours différente. En effet, s'il est possible de fournir une donnée graine qui soit la même lors de plusieurs utilisations, il est alors possible d'obtenir des valeurs qui soient également les mêmes pour les données pseudo-aléatoires qui en résulteront.

Pour fournir une donnée graine qui soit sans arrêt différente, l'invention propose d'utiliser un terminal, ici dénommé terminal, qui comporte la capacité de recevoir un signal extérieur, par exemple un signal radio-diffusé. La technologie de réception d'une onde radio, c'est-à-dire électro-magnétique, par exemple les signaux d'émetteurs radiophoniques, fourni aujourd'hui des solutions de réception à la fois économiques et peu encombrantes.

Pour les applications utilisant des objets informatisés « complets et passifs », l'invention propose alors un procédé comportant la réception d'une onde radio par un terminal connecté à une carte à puce. Le terminal comprend des moyens de réception radio d'un type connu, qui lui permettent de recevoir un signal radio, soit sous une forme numérique soit sous une forme analogique selon les variantes de l'invention. Le signal reçu est alors interprété à travers un module d'interprétation pouvant comprendre un convertisseur analogique-numérique.

Un type de signal radio utilisé peut être avantageusement reçu selon la technologie de réception d'une onde « sous-porteuse », telle que celle utilisée pour la transmission aux récepteurs FM (Modulation de Fréquence) d'informations supplémentaires selon la norme « RDS », par exemple le nom de la station radiophonique captée ou le titre d'une musique diffusée. Cette technologie sous-porteuse peut également être utilisée en mode Grandes Ondes ou AM (Modulation d'Amplitude) avec l'avantage d'une portée de réception plus importante, jusqu'à 2000 km pour un émetteur de radiodiffusion publique important.

Le signal radio utilisé peut toutefois être de n'importe quelle catégorie d'onde électromagnétique sans sortir de l'esprit de l'invention, par exemple un signal de télévision d'origine hertzienne ou satellite, ou un signal émis par un satellite quelconque comme un satellite de positionnement GPS.

Dans un mode de réalisation, le module d'interprétation du terminal extrait une ou plusieurs données numériques qui sont ensuite transmises à la carte pour servir de donnée graine dans un algorithme de génération de données pseudo-aléatoires.

Dans un mode de réalisation de l'invention, de telles données pseudo aléatoires sont utilisées par un programme au sein de la carte pour mettre en oeuvre un jeu de hasard, comportant éventuellement des gains. Des cartes sont par exemple vendues de façon similaire à des bulletins de jeu à gratter, et l'aspect aléatoire obtenu par la fourniture d'une donnée graine externe permet d'affirmer sans tromperie que toutes les cartes ont réellement la même chance de gagner. La sécurité du processus face à la fraude peut alors être assurée par des moyens connus de sécurisation des données contenues dans une carte à puce. Dans une autre phase, la validation d'une carte gagnante peut par exemple comprendre une authentification de la carte par comparaison d'une signature obtenue en fournissant une nouvelle donnée graine à cette même carte. Cette signature doit alors être identique à une signature de contrôle obtenue à partir de cette même donnée graine, par une station de contrôle utilisant un algorithme identique ou équivalent.

Dans un mode de réalisation permettant un jeu à plusieurs joueurs, l'invention comprend la diffusion d'un certain nombre de cartes à des joueurs différents. En utilisant un signal couvrant une zone géographique d'une étendue déterminée, il est alors possible à toutes les cartes se trouvant dans cette zone de générer des données à la fois aléatoires et qui soient les mêmes sur chacune de ces cartes.

Un mode de réalisation comprend alors une loterie utilisant un numéro de série propre à chaque carte pour obtenir une ou plusieurs cartes gagnantes en générant un ou plusieurs nombres au même moment sur toutes les cartes actives à ce moment.

Un autre mode de réalisation comprend la sélection pour chaque carte, par l'intermédiaire des moyens d'interface d'un terminal quelconque, d'une série de numéros à parier. Un tirage aléatoire peut alors être réalisé à un moment donné, qui donnera des numéros gagnants communs à toutes les cartes activées. Les cartes ayant mémorisé des numéros pariés correspondant aux numéros issus du tirage peuvent alors se reconnaître comme gagnantes et fournir un calcul ou une validation des gains.

De nombreuses applications peuvent nécessiter des éléments aléatoires qui soient communs à plusieurs utilisateurs.

Dans un mode de réalisation, un programme de réalité virtuelle ou de simulation, ludique ou d'entraînement, détermine des conditions aléatoires de fonctionnement. Ces conditions, par exemple de météorologie ou de résultats de combats, sont alors impossibles à prévoir ou à falsifier pour les participants à l'application.

Dans cette configuration utilisant un « objet informatisé complet et passif », le terminal peut présenter des formes variées, qui n'interfèrent que peu ou pas sur le mode de fonctionnement et la sécurité du procédé. Un tel terminal peut par exemple être intégré dans un radiotéléphone portable, dans un lecteur portable d'enregistrements sonores, dans un poste de télévision, dans une borne interactive, dans un ordinateur portable ou de bureau, ou relié à un tel appareil.

Dans un mode de réalisation représenté en figures 1 à 4, l'invention propose un procédé et un système réalisant le contrôle d'un parc d'objets informatisés, tels que des cartes (1) à puces. Dans l'exemple présenté, les cartes à puces sont utilisées pour décompter un crédit de temps. Dans certaines variantes ce temps peut correspondre à des valeurs différentes, par pondération en fonction de paramètres supplémentaires modifiables pour chaque utilisation.

Dans une utilisation de l'invention, ces objets informatisés comprennent des cartes à puces, par exemple prépayées ou rechargeables, mémorisant un solde représentant une valeur de temps de stationnement de véhicule. Dans une variante, ce solde peut être payé de diverses autres façons, par exemple en étant imputé sur un compte utilisateur pour paiement ultérieur, ou facturé après consommation ou de façon périodique.

A un stade dit de distribution, un certain nombre de cartes à puces sont fabriquées ou personnalisées ou paramétrées de façon à mémoriser une application gérant la mise en oeuvre du procédé. Cette application comprend un programme, dit programme (10) de contrôle, utilisant un algorithme (11) de signature apte à effectuer le calcul d'une signature (13) à partir d'une donnée représentant une clé dite clé de calcul et de données graines pouvant être reçues ultérieurement. Cette application comprend également des fonctionnalités permettant d'activer un décompte de temps, ce décompte provoquant la variation d'une durée ou d'une valeur de crédit de temps, mémorisée dans une donnée dite donnée (17) de solde. Ces cartes sont alors distribuées à des utilisateurs d'un service fournis par un ou plusieurs fournisseurs de services.

Selon les variantes, l'algorithme (11) de signature peut comporter un algorithme effectuant par exemple un codage ou cryptage symétrique, ou à clé secrète, ou un codage ou cryptage asymétrique, ou à clé publique et clé privée.

Selon les variantes, une même clé (12) de base peut être mémorisée dans toutes les cartes, ou un jeu de différentes clés de base dites multiples permettant un changement ultérieur de la clé (12) de base à utiliser sans remise à jour des cartes déjà distribuées.

Dans une utilisation typique, la ou les clés de base peuvent varier suivant le fournisseur de service qui émet ou distribue ces cartes. Ces clés de base peuvent également varier suivant le fabricant de la carte ou le prestataire de personnalisation. Ces clés de base peuvent bien sûr varier suivant le type de service à décompter, ou une catégorie à l'intérieur d'un même type de service. Une information, dite code de clé, peut être inscrite ou codée de façon lisible sur la carte, identifiant la clé de base ou le jeu de clés de base mémorisé dans cette carte. Une telle information permet alors à un agent de contrôle de paramétrer une station (4) de contrôle en saisissant ce code de clé. Si la valeur de la ou les clés de base correspondant à ce code est déjà mémorisée dans la station de contrôle, la saisie de ce code de clé permet alors à la station de contrôle d'utiliser comme clé de calcul la même clé de base que la carte de l'utilisateur sans que ni l'utilisateur ni l'agent de contrôle ne connaissent la valeur d'aucune de ces clés. Le choix de la clé de base ou des clés de base à utiliser peut également être défini par un code de clé contenu dans les données de signal extraites du signal.

Dans une utilisation de contrôle de stationnement, des cartes prépayées ou rechargeables sont vendues par exemple aux automobilistes, et contiennent une donnée de solde représentant soit une durée soit un montant monétaire.

Dans un mode de réalisation représenté plus particulièrement en figure 1, l'invention utilise une seule et même clé de base comme clé de calcul pour un ensemble de cartes distribuées.

Dans une phase d'activation, l'utilisateur du service active sa carte (1) en l'insérant dans un terminal (2) comportant des moyens de communication (21) avec cette carte, par exemple par connexion électrique ou par antenne radio courte portée. Ce terminal comporte également des moyens (22) d'affichage, par exemple un écran à cristaux liquides, des moyens d'alimentation en énergie, et des moyens (23) de réception radio d'un type connu. Ces moyens de réception lui permettent de recevoir un signal (3) radio, par exemple par décodage d'une onde sous-porteuse émise par un émetteur radiophonique en modulation d'amplitude. Le terminal comporte également module (24) d'interprétation apte à générer des données numériques dites données (32) de signal à partir du signal (3) reçu par les moyens (23) de réception.

Dans une phase de fonctionnement, l'utilisateur laisse la carte (1) dans le terminal (2) tout le temps qu'il souhaite activer le décompte de temps, par exemple en paiement du service, ou comme moyen de contrôle d'une durée maximale d'utilisation de ce service. Tout au long de cette phase de fonctionnement, le terminal reçoit le signal (3) radio et interprète ce signal pour en extraire des données (32) de signal. Ces données de signal sont donc générées tant que le terminal se trouve dans la zone couverte par la diffusion de ce signal avec une qualité suffisante pour que l'interprétation numérique de ce signal puisse se faire de façon non ambiguë.

Le signal utilisé peut par exemple être basé sur la réception l'un signal indiquant l'heure universelle, par exemple celui émis par l'émetteur de Francfort. L'utilisation d'un signal non prévisible permet toutefois de diminuer encore les risques de fraudes. En effet, il est plus difficile à un fraudeur de prévoir les signatures devant être générées à un instant futur s'il ne dispose pas de la nature du signal qui sera diffusé à l'instant en question.

De façon avantageuse, le module (23) d'interprétation extrait les données numériques à partir d'une onde sous-porteuse de façon connue, par exemple selon la technologie RDS utilisée pour transmettre le nom de certaines stations radiophoniques.

Dans une variante où le signal utilisé ne comporte pas d'informations spécifiquement prévues pour cet usage, ce signal est interprété suivant une période d'échantillonnage déterminée. Les données (32) de signal sont alors calculées en établissant une moyenne de certaines caractéristiques du signal sur cette période d'échantillonnage. Ces caractéristiques sont choisies de façon à ce que leur interprétation ne dépende pas ou peu de la puissance de réception du signal, de façon à ce que les données de signal extraites soient indépendantes de l'emplacement du terminal (2).

A partir d'un signal analogique il est par exemple possible d'interpréter certaines caractéristiques du signal peu dépendantes de la qualité de réception, par exemple une fonction des temps de silence au sein des sons radiodiffusés. La valeur de la fonction obtenue peut alors être comparée à une liste prédéterminée de plages de valeurs pour obtenir une donnée numérique non ambiguë dans le temps et constante d'un emplacement de réception à un autre.

Au cours de la phase de fonctionnement, c'est-à-dire tant que la carte (1) est activée, un programme (16), dit programme protégé, mémorisé dans cette carte effectue le décompte du temps qui s'écoule, et modifie la donnée (17) de solde en fonction de ce décompte. Lorsque le crédit de temps est épuisé, le programme (16) modifie l'état d'une donnée dite donnée (18) de validité, ou interromps éventuellement son propre fonctionnement. Le programme peut prévoir d'autres cas où la donnée de validité est modifiée, par exemple en cas d'erreur ou de tentative de fraude. La donnée de validité peut également comprendre des informations relatives à la quantité ou au montant de crédit temps restant, ou aux raisons pour lesquelles le fonctionnement n'est plus valide. Cette donnée de validité peut également mémoriser le temps écoulé depuis l'instant où le fonctionnement n'est plus valide. En cas de non-validité, ces informations de non-validité peuvent être transmises au terminal (2) pour affichage ou transmission à un autre appareil.

De façon répétée tout au long de la phase de fonctionnement, la carte (1) reçoit de nouvelles données (32) de signal. En combinant ces données de signal avec une clé de calcul, par exemple la clé (12) de base, l'algorithme (11) de signature du programme (10) de contrôle calcule la signature (13). Cette signature est transmise au terminal (2), qui l'affiche sur ses moyens d'affichage (22). Ce calcul de la signature, ou sa transmission au terminal, ne se fait que tant que le programme (16) protégé est actif, ou que la donnée (18) de validité indique que le fonctionnement est autorisé, et en particulier que le crédit-temps alloué n'est pas dépassé.

On comprend bien qu'ainsi toutes les cartes activées et valides dans une zone couverte par un même signal (3) vont générer des signatures qui seront toutes identiques entre elles, tout en variant au cours du temps de façon imprévisible sans la connaissance de l'algorithme de signature et de la clé de calcul, en l'occurrence la clé (12) de base ou l'une des clés de base multiples.

Lorsque le signal comporte une caractéristique régulière permettant une synchronisation des périodes d'échantillonnage ou de calcul de la signature, il est possible à chaque carte d'effectuer son changement de signature au même moment. Si une période complète est nécessaire pour calculer la signature, une carte nouvellement activée pourra alors afficher une signature déterminée, ou signature de démarrage, en attendant la prochaine période complète. L'ensemble des cartes de la zone pourra alors changer de signature au même moment.

Lorsque le signal ne comporte pas de caractéristiques de synchronisation, des cartes différentes pourront effectuer leur changement de signature à des moments différents, le plus souvent espacés de moins d'une période de changement de signature.

Dans une variante (non représentée), le terminal ou la carte reçoit également un deuxième signal indiquant l'heure universelle et utilise ce deuxième signal pour synchroniser les périodes de calcul de ses données de signal ou de sa signature.

Pour réaliser un contrôle des cartes de crédit de temps du parc dans une zone couverte par le signal, un opérateur humain ou automatique, dit agent de contrôle, agissant pour le compte du fournisseur de service peut alors utiliser une station (4) de contrôle apte à générer les mêmes données (324) de signal qu'une carte (1) recevant ce même signal (3). Cette station de contrôle mémorise un programme utilisant un algorithme (41) capable d'obtenir les mêmes résultats que celui des cartes à contrôler, lorsqu'il dispose des mêmes éléments.

En étant réglée sur le même signal (3), et en utilisant la même clé (12) de base que les cartes à contrôler, la station de contrôle pourra donc afficher une signature (43) de contrôle identique à la signature (13) des cartes à contrôler. Dans les variantes où les cartes effectuent leur changement de signature de façon non synchrone, la station de contrôle peut mémoriser les signatures antérieures et afficher plusieurs signatures en même temps, par exemple toutes les signatures actuellement valides à un moment donné.

En comparant la signature (13) affichée par une carte (1) contrôlée avec la signature (43) de contrôle affichée par la station (4) de contrôle, l'agent de contrôle peut alors savoir si cette carte contient bien un algorithme (11) de signature et une clé de calcul valide et si son fonctionnement est correctement activé. Il est ainsi possible à l'agent de contrôle de savoir si l'utilisateur satisfait à des exigences de contrôles, pouvant être affichées sur place ou autrement connues, et de prendre des mesures en conséquence.

Selon les applications, le terminal peut être propre à chaque utilisateur, à chaque carte, être prêté à l'utilisateur, ou être intégré dans un appareil remplissant d'autres fonctions similaires ou non.

Dans une utilisation en contrôle de stationnement, les conducteurs de véhicule désirant stationner peuvent ainsi utiliser un terminal placé de façon visible dans leur véhicule pour justifier de l'achat d'une carte de stationnement et prouver que cette est activée pendant la durée d'un stationnement. Un agent de contrôle peut alors être une personne équipée d'une station de contrôle qui vérifie auprès de chaque véhicule que la carte est activée et valide, par comparaison de la signature de la carte avec la signature de contrôle.

Dans une variante, le calcul de la signature ou sa transmission ne s'effectue que sur demande de l'agent de contrôle, par déclenchement d'une commande. Ce déclenchement peut se faire par exemple en appuyant sur un bouton sur le terminal, ou en envoyant une commande au terminal depuis la station de contrôle par exemple par voie électrique ou radio ou magnétique, par un transpondeur magnétique ou en présentant une pièce métallique à proximité de capteurs magnétiques reliés au terminal.

Dans une variante, la signature est communiquée ou transmise directement à la station de contrôle par des moyens connus.

Dans une autre variante, la signature est affichée sous une forme lisible de façon automatique par la station de contrôle, par exemple par lecture de codes barres. La station de contrôle dispose alors de moyens de lecture automatisée lui permettant de lire automatiquement la signature affichée par le terminal, par exemple sous forme de codes barres. Ces moyens de lecture automatisée peuvent également être prévus pour lire automatiquement d'autres informations inscrites ou affichées sur la carte ou sur le terminal, comme par exemple des données individuelles ou des paramètres supplémentaires comme décrits plus bas.

Dans un mode de réalisation représenté plus particulièrement en figure 2, l'invention permet à l'utilisateur de la carte (1) d'utiliser des paramètres (14) supplémentaires qui conditionneront le mode de fonctionnement de cette carte une fois activée. Ces paramètres supplémentaires peuvent être saisis ou modifiés par l'utilisateur, par exemple lors de chaque activation. Cette saisie ou modification peut se faire par exemple à l'aide du terminal (2) qui comporte alors des moyens de saisie (25). Ces paramètres supplémentaires peuvent affecter par exemple la vitesse de décompte du crédit de temps ou la valeur d'une unité de temps. Ces paramètres (14) supplémentaires peuvent également comprendre une information identifiant le service ou le fournisseur de service pour lequel la carte (1) est utilisée, ou la zone d'utilisation, ou le signal (3) sur lequel elle est réglée, ou un mode de réception dudit signal.

Lors de la phase de fonctionnement, la carte calcule la signature (13) à afficher en combinant ces paramètres (14) supplémentaires avec les données (32) de signal et la clé de calcul, en l'occurrence la clé (12) de base ou l'une des clés de base multiples.

Pour le contrôle, l'agent de contrôle mémorise ces paramètres (14) supplémentaires dans la station (4) de contrôle, par exemple par des moyens (45) de saisie. Cette station de contrôle utilise alors ces paramètres (14) supplémentaires pour calculer et afficher la signature de contrôle. Dans une variante, ces paramètres sont préprogrammés dans la station de contrôle et activés par des moyens de sélection comme par exemple par action sur une touche ou un curseur.

On comprend bien qu'en saisissant ces paramètres (14) supplémentaires, l'utilisateur effectue un paramétrage du fonctionnement de la carte. Ces paramètres étant pris en compte dans le calcul de la signature (13), cette signature ne concordera avec la signature (43) de contrôle que si les paramètres supplémentaires mémorisés dans la carte (1) sont conformes à ceux mémorisés dans la station (4) de contrôle. Ainsi, quand le mode de fonctionnement obtenu par ces paramètres supplémentaires est une condition d'utilisation du service motivant le contrôle, l'invention permet de contrôler que l'utilisateur présente bien une carte authentique, valide, activée, et fonctionnant selon les bons paramètres.

Dans une utilisation en contrôle de stationnement, ces paramètres supplémentaires pourront être connus par l'utilisateur ou affichés sur le lieu de stationnement. Il peut s'agir de saisir une information conditionnant le coût du stationnement ou la durée maximale de stationnement autorisée. Cette indication peut correspondre à une zone géographique ou tarifaire, à un type de véhicule ou de stationnement, à un niveau de service incluant par exemple le gardiennage. Ces paramètres sont alors saisis par l'agent de contrôle chaque fois qu'il change de type de zone ou service à contrôler.

Dans un mode de réalisation représenté plus particulièrement en figures 3 et 4, l'invention permet à l'utilisateur de la carte (1) d'utiliser des données (15) individuelles qui sont propres à sa configuration d'utilisation, par exemple à sa personne, à sa carte ou son terminal, à un compte utilisateur.

Dans le cas d'une personnalisation après distribution (figure 4), ces données (15) individuelles sont saisies et mémorisées dans la carte (1), par exemple par l'utilisateur à l'aide du terminal (2), ou à l'aide d'une borne de distribution automatisée. Dans la carte, ces données (15) individuelles sont combinées avec la ou les clés (12) de base déjà mémorisées pour donner une autre clé, dite clé (121) fille. Cette clé fille est mémorisée dans la carte et sera utilisée comme clé de calcul dans le calcul de la signature (13) lors de la phase de fonctionnement.

Dans une variante (non représentée) où une personnalisation est effectuée avant distribution, ces données individuelles sont combinées avec une clé mère pour donner une autre clé, dite clé fille, qui est mémorisée dans la carte. Cette personnalisation peut être faite par exemple par le fournisseur de service ou un distributeur ou par une borne de distribution automatisée. Selon les applications, ces données individuelles peuvent éventuellement être mémorisées dans la carte, ou inscrite sur la carte, ou les deux.

Dans le mode de réalisation représenté plus particulièrement en figure 3, la personnalisation est réalisée en plusieurs temps, à la fois avant distribution à l'utilisateur et après cette distribution. Avant distribution, une clé-mère (120), combinée avec une donnée (151) de personnalisation, donne alors la clé de base (12), qui sera seule mémorisée dans la carte distribuée. La clé-mère, est mémorisée dans la machine (5) de personnalisation ou dans une autre carte (50) servant de clé lors de la personnalisation. De façon avantageuse, la clé mère (120) n'est pas mémorisée dans la carte (1) distribuée, ce qui limite les risques de diffusion illégitime de cette clé mère. Après distribution, cette clé (12) de base peut alors être combinée avec la donnée (15) individuelle pour donner la clé fille qui sera utilisée dans le calcul de la signature.

Dans une variante, les données (15) individuelles sont mémorisées dans la carte de façon à ne pouvoir être modifiées par l'utilisateur.

Dans une variante, les données (15) individuelles et les données (151) de personnalisation ont au moins une partie commune, ou sont identiques.

Dans une variante, ces données individuelles conditionnent ou modifient le fonctionnement du programme (16) de décompte de crédit de temps. Il peut s'agir d'effectuer ce décompte à partir d'un compte déterminé, lorsque la carte en comporte plusieurs. Il peut s'agir d'utiliser un tarif ou un mode de calcul individualisé, ou par catégorie.

Pour le contrôle, l'agent de contrôle prend connaissance de ces données (15) individuelles ou des données (151) de personnalisation ou des deux, auprès de l'utilisateur ou par lecture sur la carte, le terminal, ou l'appareil qui les porte. Dans une variante, ces données individuelles ou de personnalisation sont transmises directement du terminal à la station de contrôle, par des moyens connus. Dans une autre variante, ces données individuelles ou de personnalisation sont affichées par le terminal et lues automatiquement par des moyens de lecture de la station de contrôle, par exemple sous forme de codes barres.

On comprend bien qu'ainsi l'invention permet d'effectuer un contrôle individualisé. Dans le cas d'un paramétrage individualisé du fonctionnement du décompte de crédit temps, l'invention permet ainsi de contrôler que l'utilisateur présente bien une carte authentique, valide, activée, et fonctionnant selon les paramètres correspondant à son identité ou à sa catégorie. Dans le cas d'un paramétrage individualisé une fois pour toutes, l'invention permet ainsi de contrôler que l'utilisateur présente bien une carte authentique, valide, activée, et personnalisée de façon cohérente avec l'identification ou la catégorie qu'il présente. Cet aspect permet en particulier de diminuer les risques d'utilisation d'une carte volée.

Dans une variante représentée plus particulièrement en figure 4, le programme de la station de contrôle comprend un algorithme, dit algorithme (410) complémentaire, apte à combiner la signature, signature (130) individualisée, d'une carte incluant des données (15) individuelles avec une signature (43) obtenue sans ces mêmes données individuelles, cette combinaison donnant comme résultat la valeur des données individuelles utilisées par la carte. Le terminal peut alors comporter l'affichage combiné de la signature (130) individualisée, c'est-à-dire obtenue avec ces données (15) individuelles, et de la signature (13) de base, c'est-à-dire obtenue sans ces mêmes données individuelles.

Dans une telle variante, la signature (130) individualisée de la carte (1) peut par exemple être affichée par le terminal (2) sous une forme lisible automatiquement, par exemple incluant un code barre. Lorsqu'il a effectué un premier contrôle de la validité de la carte, comme décrit précédemment, l'agent de contrôle peut alors effectuer un deuxième contrôle portant sur les données (15) individuelles mémorisées dans cette carte. Dans ce deuxième contrôle, la station (4) de contrôle lit la signature (130) individualisée par des moyens de lecture automatisée et l'introduit dans l'algorithme (410) complémentaire. Cet algorithme complémentaire combine cette signature individualisée à une signature de base, celle (13) de la carte ou la sienne (43) propre si elles sont identiques, et en extrait la valeur des données (15) individuelles utilisées par la carte. L'agent de contrôle peut alors comparer ces données individuelles avec l'identification présentée par l'utilisateur pour vérifier que cet utilisateur utilise cette carte de façon légitime.

Dans une variante (non représentée), la station de contrôle combine la signature individualisée avec une signature obtenue à partir de la clé mère (121 ; figure 3) pour extraire la valeur des données (15) individuelles ou des données (151) de personnalisation ou de l'une des deux.

On comprend qu'ainsi l'invention permet de réaliser à la fois un contrôle non individualisé, ne nécessitant pas ou peu de saisie de données pour chaque contrôle de carte, et d'avoir la possibilité de comparer, sans saisie supplémentaire, des données individuelles mémorisées dans la carte avec une identification présentée par l'utilisateur. Il est ainsi possible de diminuer les risques d'utilisation illégitime d'une carte, sans alourdir le travail de l'agent de contrôle de façon importante.

Dans une utilisation en contrôle de stationnement, ces données individuelles peuvent être affichées ou inscrites sur le terminal, sur la carte, ou sur le véhicule. Il peut s'agir de saisir une information individuelle ou par catégorie conditionnant le coût du stationnement ou la durée maximale de stationnement autorisée. Cette indication peut correspondre à une zone géographique ou tarifaire, à un type de véhicule ou de stationnement, à un niveau de service incluant par exemple le gardiennage.

Ces données sont alors lues sur le véhicule, la carte ou le terminal, et saisies par l'agent de contrôle chaque fois qu'il contrôle un nouveau véhicule.

Ces données individuelles peuvent également représenter le numéro de série de la carte ou du terminal, ou le numéro d'immatriculation du véhicule, ou toute autre identification visible lors du stationnement. Le fait que la signature fournie par la carte dépende d'une telle identification permet alors à la carte de n'être utilisable qu'avec cette identification.

Dans une variante du contrôle de stationnement utilisant un algorithme complémentaire, l'agent de contrôle réalise un premier contrôle, de validité de la carte, par lecture de la signature de base sur le terminal. Il peut alors effectuer un deuxième contrôle, pour vérifier que la carte n'est pas volée ou correspond bien au véhicule. Pour cela, la station de contrôle lit automatiquement la signature individualisée sur le terminal, et en extrait les données individuelles utilisées par la carte pour générer cette même signature individualisée. L'agent de contrôle peut alors comparer aisément ces données individuelles extraites par sa station de contrôle avec l'identification visible sur le véhicule.

Dans une variante, le programme (16) protégé réalise un décompte d'un crédit représentant des unités indépendantes qui ne dépendent pas forcément du temps. Il peut s'agir alors d'un nombre d'unités téléphoniques décomptées en paiement d'un service, d'un nombre de parties de jeu, ou de tout type d'unités ou de jetons.

Dans un mode de réalisation (non représenté), l'invention propose un procédé et un système réalisant le contrôle d'un parc d'objets informatisés, tels que des cartes à puces, utilisés pour authentifier une personne ou un dispositif à travers sa possession d'un tel objet informatisé. Un tel mode de réalisation peut également être utilisé pour conditionner le fonctionnement d'un dispositif ou d'un logiciel informatique. C'est-à-dire qu'un système ou logiciel ou dispositif utilisant une application, dite application protégée, ne peut être utilisée que si l'utilisateur dispose d'un tel objet informatisé.

Le procédé et le système tels que décrits plus haut sont alors proposés dans une configuration où le programme mémorisé dans la carte à puce effectue le calcul et la transmission seulement lorsqu'un autre programme, dit application protégée, fonctionne également, même si cette application ne comporte pas de décompte de crédit de temps. Cette application protégée est alors mémorisée au moins partie dans la carte, et peut comporter une fonction commandant la modification de l'état ou de la valeur de la donnée de validité.

L'invention peut ainsi permettre de limiter l'accès d'un lieu ou l'utilisation d'un dispositif ou d'un service aux seules personnes disposant d'une carte à puce distribuée par le fournisseur de ce service ou l'exploitant de ce lieu ou dispositif. Cette utilisation peut alors également être conditionnée à la présence activée et contrôlable d'une telle carte. Cette utilisation peut de plus être conditionnée à l'activation d'un autre programme mémorisé dans cette carte, par exemple pour des raisons de sécurité. Il peut s'agir par exemple de l'utilisation d'une salle de billard, d'un ordinateur, d'une automobile, ou d'un engin quelconque. Il peut également s'agir d'un lieu, dispositif, ou système nécessitant le fonctionnement d'un logiciel spécifique pour être utilisé en toute sécurité, comme un logiciel de protection anti-virus ou un système de contrôle d'alcoolémie.

Dans le cas d'un objet informatisé « en module complet », le terminal et la carte décrits plus haut sont regroupés dans un même module. Cet objet informatisé, ou module, regroupe alors les moyens de réception du signal, les moyens d'interprétation du signal, les moyens d'affichage ou de transmission de la ou des signatures, et les éventuels moyens de saisie.

Un tel module complet peut être réalisé sous la forme d'un objet informatisé, portable ou non, ou être intégré dans un autre dispositif ou système.

Une utilisation d'un tel module informatisé peut par exemple comprendre le fait, pour une personne ou un ordinateur, de s'authentifier auprès d'un autre système utilisant ou comportant une station de contrôle. Cette authentification peut se faire en communiquant à un moment donné la signature individualisée indiquée par le module informatisé, même à travers des moyens de communication présentant peu de garanties de confidentialité.

Dans le cas d'un « objet informatisé multiple », une partie des algorithmes et données est mémorisée dans un objet passif, une autre partie est mémorisée dans le lecteur ou terminal.

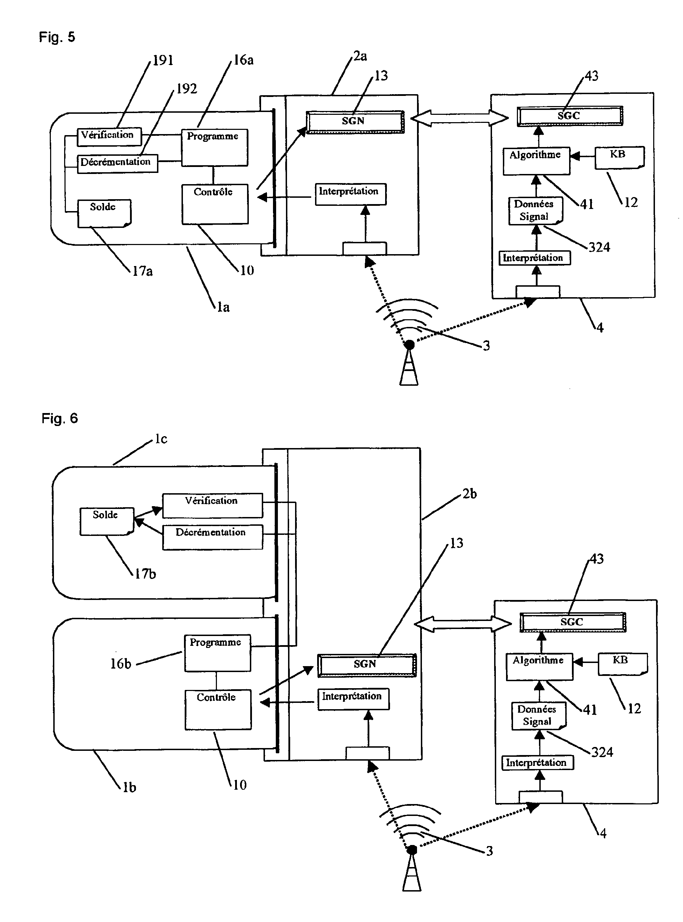

Dans un mode de réalisation de ce type, représenté en figure 5, l'invention comporte un objet passif comprenant une carte (1a) à puce remplissant uniquement des fonctionnalités dites de « porte-monnaie électronique », par exemple selon le standard « Moneo » (marque déposée). Cette carte mémorise alors un solde (17), par exemple correspondant à une valeur monétaire, et comporte des algorithmes lui permettant de recevoir des commandes de vérification (191) et de décrémentation (192) de ce solde. Une telle carte (1a) peut ainsi être compatible avec plusieurs types de services en ne comportant que des fonctions de gestion d'un solde monétaire.

Le programme (10) de contrôle, ainsi que les fonctionnalités de saisie de données (114, 15) complémentaires sont alors mémorisées et exécutées dans le terminal (2a). Lors d'un contrôle, l'agent de contrôle réalise alors le contrôle de validité et d'activité du terminal (2a).

Dans le cas d'un contrôle de crédit de temps, c'est le terminal (2a) qui comporte un programme (16a) de décompte de temps et de décrémentation de la valeur (1) mémorisée dans cette carte (1a). C'est ce programme (16) de décompte de temps qui n'autorise le contrôle ou ne reste activé que tant que cette valeur n'est pas nulle. Lors d'un contrôle, c'est la validité et l'activité du terminal qui sont alors contrôlées par l'agent de contrôle.

Une utilisation d'un tel objet informatisé multiple peut par exemple comprendre le fait, pour une personne ou un ordinateur, de connecter une carte(1a) porte-monnaie multi-service à un terminal (2a) d'identification spécifique au service exigeant un contrôle.

Dans un autre mode de réalisation selon la configuration « d'objet informatisé multiple », l'invention comporte un terminal (2b) communiquant avec d'une part une carte (1c) à puce de type porte-monnaie électronique, et d'autre part un objet (1 b) informatisé passif, dit objet d'identification.

Les fonctionnalités de calcul de signatures sont alors mémorisées et exécutées dans l'objet (1 b) d'identification. L'affichage ou la transmission des signatures, la réception et l'interprétation du signal, ainsi que les saisies de données complémentaires sont réalisées par le terminal (2b). Le programme (10) de contrôle de l'objet d'identification ne retourne la signature que si un programme (16b) protégé, mémorisé également dans l'objet (1 b) d'identification, est en fonctionnement et lui indique que le solde (17a) de la carte (1 c) porte-monnaie est suffisant. Ce programme (16b) peut réaliser des opérations de vérification (191) et de décrémentation (192) de ce solde (17b) en communiquant avec cette carte (1c) par l'intermédiaire du terminal (2b).

Dans le cas d'un contrôle de crédit de temps, c'est le programme (16b) protégé de l'objet d'identification qui comporte un programme de décompte de temps et de décrémentation de la valeur mémorisée dans la carte porte-monnaie, et ne reste activé que tant que cette valeur n'est pas nulle. Lors d'un contrôle, l'agent de contrôle réalise alors le contrôle d'authenticité et d'activité de l'objet d'identification, et de validité du solde de la carte porte-monnaie.

Une utilisation d'un tel objet informatisé multiple peut par exemple comprendre le fait, pour une personne ou un ordinateur, de connecter une carte porte-monnaie multi-service à un terminal, conjointement avec un objet d'identification spécifique au service exigeant un contrôle.

La présente description expose l'invention dans des modes de réalisation comportant une répartition déterminée des tâches et opérations entre les différents algorithmes et programmes concernés. La flexibilité de l'organisation d'une application informatique permet bien sûr de présenter différemment cette répartition, en particulier lorsque les distinctions entre les différents algorithmes et leurs dénominations sont des notions abstraites n'influant pas sur leurs caractéristiques principales de fonctionnement. Il est donc évident que le procédé selon l'invention peut également être mis en oeuvre dans d'autres modes de réalisation non décrits ici, sans sortir de l'esprit de l'invention, en particulier en combinant différemment les diverses variantes exposées pour chaque variable ou algorithme. De même, la répartition abstraite des tâches entre des programmes ou applications mémorisés en un même lieu et temps, peut être combinée en diverses variantes non décrites ici sans sortir de l'esprit de l'invention.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Utilisation d'au moins un objet (1) informatisé pour la génération d'une donnée pseudo-aléatoire, cet objet informatisé comportant des moyens de traitement de données, des moyens de mémorisation, ainsi que des moyens d'affichage ou des moyens de communication avec un dispositif de traitement de données, dit terminal (2), **caractérisé en ce que** cette utilisation pour la génération de la donnée pseudo-aléatoire comporte les étapes suivantes :
- réception d'au moins un signal (3) extérieur, par l'objet (1) informatisé ou par le terminal (2), ce signal (3) variant au cours du temps, étant diffusé dans une zone déterminée sans nécessiter d'adressage du signal ni d'informations spécifiquement prévues pour cette utilisation ;
- génération, par un module d'interprétation (24), de données (32) de signal, à partir du signal (3) extérieur reçu, pour fournir une donnée, dite graine, sans arrêt différente ;
- calcul, par l'objet (1) informatisé à l'aide d'un algorithme mémorisé dans cet objet (1), de la donnée numérique pseudo-aléatoire, dite signature (13), à partir de ladite donnée graine.

2. Utilisation d'un objet (1) informatisé selon la revendication précédente, **caractérisé en ce que** le signal (3) extérieur est un signal radio, c'est à dire utilisant des ondes électro-magnétiques, émis par un émetteur de diffusion, le procédé comportant en outre les étapes suivantes :
- réception du signal radio par le terminal (2) ;
- génération des données (32) de signal par le module (24) d'interprétation, à partir de ce signal radio ;
- transmission de ces données (32) de signal à l'objet (1) informatisé.

3. Utilisation d'un objet (1) informatisé selon l'une des revendications précédentes, **caractérisé en ce que** le signal radio représente des informations comportant des caractéristiques irrégulières ou non prévisibles.

4. Utilisation d'un objet (1) informatisé selon l'une des revendications précédentes, **caractérisé en ce que** le signal radio est reçu par la lecture d'une onde sous-porteuse, associée à une diffusion d'ondes radiophoniques.

5. Utilisation d'un objet (1) informatisé selon l'une des revendications précédentes, **caractérisé en ce que** le signal (3) comporte une pluralité de périodes de temps déterminées, l'information fournie par ce signal étant constante ou interprétable de façon constante à l'intérieur de chacune de ces périodes déterminées, mais variant de façon irrégulière ou non prévisible d'une période à une autre.

6. Utilisation d'un objet (1) informatisé pour le contrôle d'une donnée pseudo-aléatoire générée par cet objet (1) informatisé comportant des moyens de traitement de données, des moyens de mémorisation, ainsi que des moyens d'affichage ou des moyens (21) de communication avec un dispositif de traitement de données dit terminal (2), **caractérisé en ce que** cette utilisation pour le contrôle de la donnée pseudo-aléatoire comporte les étapes suivantes :
- génération d'une donnée pseudo-aléatoire, dite signature (13), par utilisation de cet objet (1) informatisé selon l'une des revendications précédentes ;
- affichage de cette signature (13), ou transmission de cette signature au terminal (2), pour vérification par rapport à une donnée (43) calculée par un autre appareil (4), dit station de contrôle, à partir du même signal (3) numérique ou analogique, cette vérification pouvant être faite dans le terminal (2) ou en dehors.

7. Utilisation d'un objet (1) informatisé selon la revendication précédente, **caractérisé en ce qu'**elle comporte une étape de comparaison vérifiant la valeur d'une donnée, dite donnée (18) de validité, mémorisée dans l'objet (1) informatisé, cette vérification conditionnant ou modifiant le calcul, l'affichage ou la transmission de la signature (13).

8. Utilisation d'un objet (1) informatisé selon l'une des revendications 6 à 7, **caractérisé en ce qu'**elle comporte une étape d'affichage, sur des moyens (22) d'affichage du terminal (2), de la signature (13) reçue par le terminal depuis l'objet (1) informatisé.

9. Utilisation d'un objet (1) informatisé selon l'une des revendications 6 à 8, **caractérisé en ce que** la signature (13) est calculée par l'objet (1) informatisé par un algorithme, dit algorithme (11) de signature, utilisant au moins une donnée, dite clé de calcul.

10. Utilisation d'un objet (1) informatisé selon l'une des revendications 6 à 9, **caractérisé en ce que** la clé de calcul est calculée à partir d'une donnée, dite clé (12) de base, mémorisée dans l'objet (1) informatisé.

11. Utilisation d'un objet (1) informatisé selon l'une des revendications 6 à 10, **caractérisé en ce que** plusieurs données, dites clés de base multiples, sont mémorisées dans l'objet (1) informatisé, cette utilisation comportant une étape de saisie d'une donnée représentant, parmi ces clés de base multiples, la donnée à utiliser comme clé (12) de base.

12. Utilisation d'un objet (1) informatisé selon l'une des revendications 6 à 11, **caractérisé en ce qu'**elle comporte une étape de personnalisation de l'objet (1) informatisé par saisie d'au moins une donnée, dite donnée (15) individuelle, cette donnée individuelle étant utilisée par l'objet informatisé en combinaison avec la clé (12) de base pour calculer une donnée, dite clé (121) fille, qui sera utilisée comme clé de calcul.

13. Utilisation d'un objet (1) informatisé selon l'une des revendications 6 à 12, **caractérisé en ce qu'**elle comporte une étape de saisie et mémorisation dans l'objet (1) informatisé d'au moins une donnée, dite paramètre (14) supplémentaire, l'algorithme (11) de signature combinant ce paramètre supplémentaire avec la clé (12, 121) de calcul et les données (32) de signal pour calculer la signature (13, 130).

14. Utilisation d'un objet (1) informatisé selon l'une des revendications 6 à 13, **caractérisé en ce qu'**elle comporte une étape utilisant un algorithme, dit algorithme (410) complémentaire, réalisant l'extraction de la donnée individuelle qui a été utilisée pour générer une signature, dite signature (130) individualisée, en comparant cette signature individualisée avec une signature, dite signature (13) de base, qui a été générée en combinant les mêmes données sauf ladite donnée (15) individuelle.

15. Utilisation d'au moins un objet (1) informatisé pour l'authentification d'un ou plusieurs objets (1), ou de leur validité, grâce à une utilisation de ces objets (1) informatisés selon l'une des revendications précédentes, ces objets (1) appartenant à un parc d'objets (1) distribués à des utilisateurs, **caractérisé en ce que** cette utilisation pour l'authentification comporte les étapes suivantes :
- activation dans une station de traitement de données, dite station (4) de contrôle, d'un algorithme (41) de contrôle reproduisant les résultats de l'algorithme (11) de signature mémorisé dans les objets (1) à authentifier ;
- mémorisation éventuelle, dans la station de contrôle, d'une donnée représentant la clé (12) de base mémorisée dans les objets à authentifier, ou celle des clés de base multiples devant être utilisée comme clé de base ;
- mémorisation éventuelle, dans la station de contrôle, d'au moins une donnée représentant les paramètres (14) supplémentaires devant être mémorisés dans les objets (1) à authentifier ;
- pour chaque objet à authentifier utilisant une donnée individuelle, lecture ou réception en provenance de l'objet d'une donnée (15) représentant la donnée individuelle et mémorisation de cette donnée individuelle dans la station (4) de contrôlée ;
- calcul par la station (4) de contrôle, à l'aide de l'algorithme (41) de contrôle, d'une donnée, dite signature (43) de contrôle, en fonction des données éventuellement mémorisées plus haut ;
- lecture ou réception de la signature (13) calculée par un objet (1) à authentifier et vérification de cette même signature par rapport à la dernière signature (43) de contrôle obtenue par
- la station (4) de contrôle, ou avec une précédente signature de contrôle.

16. Utilisation d'au moins un objet (1) informatisé selon la revendication précédente, **caractérisé en ce que** la donnée (15) individuelle mémorisée dans l'objet (1) informatisé ne peut être modifiée que dans des conditions déterminées, l'utilisation de l'objet (1) pour l'authentification comportant en outre les étapes suivantes :
- calcul par l'objet (1) informatisé et transmission au terminal (2) d'une signature (13) de base sans utilisation de la donnée (15) individuelle ;
- calcul par l'objet informatisé et transmission au terminal d'une signature (130) individualisée avec utilisation de la donnée individuelle ;
- affichage de ces signatures (13, 130), ou transmission de ces signatures au terminal (2), pour vérification par rapport à au moins une donnée (43) calculée par un autre appareil (4) à partir du même signal (3) numérique ou analogique, cette vérification pouvant être faite dans le terminal ou en dehors.

17. Utilisation d'au moins un objet (1) informatisé selon l'une des revendications 15 à 16, **caractérisé en ce que** la station (4) de contrôle comporte un algorithme (410) complémentaire, ('utilisation de l'objet (1) pour l'authentification comportant en outre les étapes suivantes :
- mémorisation dans la station (4) de contrôle d'une signature (130) individualisée fournie par l'objet (1) informatisé ;
- extraction dans la station de contrôle, par l'algorithme (410) complémentaire, de la donnée (15) individuelle utilisée par l'objet (1) informatisé pour générer la signature (130) individualisée, pour comparaison avec une identification fournie ou présentée par l'utilisateur, ou l'objet informatisé, ou le terminal, ou un dispositif ou un lieu incluant ou utilisant cet objet informatisé.

18. Utilisation d'au moins un objet (1) informatisé pour le contrôle d'un décompte de crédit, **caractérisé en ce que** ce contrôle comporte une utilisation d'objets (1) informatisés selon l'une des revendications précédentes, ces objets informatisés, d'une part, mémorisant une donnée (17) de solde, représentant une valeur de crédit disponible et un programme (16) incluant un algorithme de décompte apte à modifier cette donnée de solde, et, d'autre part, comportant une donnée (18) de validité présentant un état déterminé lorsque l'algorithme de décompte est activé et que la donnée de solde représente un crédit non nul, cette modification de la donnée de solde se faisant en fonction d'une ou plusieurs durées d'activation de l'objet, cette utilisation pour le contrôle comportant les étapes suivantes :
- distribution à des utilisateurs de tels objets informatisés ;
- authentification et contrôle de la validité d'un ou plusieurs de ces objets informatisés, à l'aide d'une station de contrôle selon l'une des revendications 6 à 16, ces objets informatisés étant présentés par les utilisateurs ou accessibles pour contrôle.

19. Utilisation d'au moins un objet (1) informatisé selon la revendication précédente, **caractérisé en ce que** la modification de la donnée (17) de solde se fait également en fonction de données représentant une donnée (15) individuelle ou un paramètre (14) supplémentaire ou un choix de clé (12) de base ou une combinaison d'au moins deux de ces éléments.

20. Utilisation d'au moins un objet (1) informatisé pour le contrôle d'utilisation d'un dispositif ou d'un système comportant ou utilisant un programme informatique, dit application protégée, **caractérisé en ce qu'**au moins une partie de l'application protégée est exécutée grâce à l'utilisation d'un objet (1) informatisé selon l'une des revendications précédentes, ou utilise un programme exécuté dans ce même objet (1) informatisé, le calcul de la signature (13) ou son affichage par l'objet informatisé ou sa transmission au terminal (2) ne s'effectuant que si l'application protégée est active.

21. Objet (1) informatisé comportant des moyens de traitement de données, des moyens de mémorisation, ainsi que des moyens d'affichage ou des moyens de communication avec un dispositif de traitement de données, dit terminal (2), **caractérisé en ce qu'**il comporte au moins un algorithme de calcul permettant de générer une donnée pseudo-aléatoire à partir d'une donnée graine générée par un module d'interprétation (24) à partir de données fournies par la réception d'un signal (3) extérieur, par l'objet (1) informatisé ou par le terminal (2), ce signal (3) variant au cours du temps et étant diffusé dans une zone déterminée sans nécessiter d'adressage du signal ni d'informations spécifiquement prévues pour fournir cette donnée graine.

22. Système de contrôle d'un parc d'objets informatisés comprenant au moins un objet (1) informatisé comportant des moyens de traitement de données, des moyens de mémorisation, ainsi que des moyens d'affichage ou des moyens de communication avec un dispositif de traitement de données, dit terminal (2), **caractérisé en ce que** ledit objet (1) informatisé comporte au moins un algorithme de calcul permettant de générer une donnée pseudo-aléatoire à partir d'une donnée graine générée par un module d'interprétation (24) à partir de données fournies par la réception d'un signal (3) extérieur, par l'objet (1) informatisé ou par le terminal (2), ce signal (3) variant au cours du temps et étant diffusé dans une zone déterminée sans nécessiter d'adressage du signal ni d'informations spécifiquement prévues pour fournir cette donnée graine, la donnée pseudo-aléatoire permettant l'utilisation de l'objet (1) informatisé selon l'une des revendications 6 à 19.

23. Système de contrôle d'utilisation d'un dispositif ou d'un système comportant ou utilisant un programme informatique, dit application protégée, comportant au moins un objet (1) informatisé comportant des moyens de traitement de données, des moyens de mémorisation, ainsi que des moyens d'affichage ou des moyens de communication avec un dispositif de traitement de données, dit terminal (2), **caractérisé en ce que** ledit objet (1) informatisé comporte au moins un algorithme de calcul permettant de générer une donnée pseudo-aléatoire à partir d'une donnée graine générée par un module d'interprétation (24) à partir de données fournies par la réception d'un signal (3) extérieur, par l'objet (1) informatisé ou par le terminal (2), ce signal (3) variant au cours du temps et étant diffusé dans une zone déterminée sans nécessiter d'adressage du signal ni d'informations spécifiquement prévues pour fournir cette donnée graine, la donnée pseudo-aléatoire permettant l'utilisation de l'objet (1) informatisé selon la revendication 20.

24. Système de contrôle d'objets informatisés ou de contrôle d'utilisation d'un dispositif ou système selon l'une des revendications 22 et 23, **caractérisé en ce qu'**il comporte plusieurs objets informatisés dans lesquels sont répartis les algorithmes et données nécessaires à leur utilisation.

25. Utilisation d'au moins un objet (1) informatisé pour le contrôle de titres de droit de stationnement de véhicules, **caractérisé en ce que** le contrôle de ces titres met en oeuvre l'utilisation d'au moins un objet (1) informatisé selon l'une des revendications 1 à 20 et **en ce que** les objets (1) informatisés sont des cartes à puces, prépayées ou à crédit, dont une donnée (17) de solde représente une valeur de temps de stationnement.

26. Utilisation d'au moins un objet (1) informatisé selon la revendication précédente, **caractérisé en ce qu'**au moins un paramètre (14) supplémentaire correspond à une zone géographique de stationnement ou à un type de tarification ou une combinaison des deux.

27. Utilisation d'au moins un objet (1) informatisé selon l'une des revendications 24 et 25, **caractérisé en ce qu'**au moins une donnée (15) individuelle correspond à une donnée identifiant l'objet (1) informatisé ou à une donnée identifiant un véhicule ou un utilisateur ou un compte utilisateur, ou une combinaison de ces éléments.

## Claims

1. Use of at least one computer-based object (1) for the generation of a pseudo-random data item, this computer-based object including data processing means, storage means, and also of display means or means of communication with a data processing device, referred to as a terminal (2), **characterised in that** this use for the generation of the pseudo-random data includes the following steps:
- reception of at least one external signal (3) by the computer-based object (1) or by the terminal (2), this signal (3) varying over time, being transmitted in a defined zone without the need for addressing of the signal nor for information specifically provided for this use;
- generation, by an interpretation module (24), of signal data (32), on the basis of the external signal (3) received, in order to continuously supply a different data item, referred to as a seed data item;
- calculation, by the computer-based object (1) with the aid of an algorithm stored in this object (1), of the pseudo-random digital data, referred to as the signature (13), on the basis of the said seed data item.

2. Use of a computer-based object (1) as claimed in the preceding claim, **characterised in that** the external signal (3) is a radio signal, that is to say a signal using electromagnetic waves, emitted by a broadcasting transmitter, the method also including the following steps:
- reception of the radio signal by the terminal (2);
- generation of signal data (32) by the interpretation module (24) on the basis of this radio signal;
- transmission of these signal data (32) to the computer-based object (1).

3. Use of a computer-based object (1) as claimed in any one of the preceding claims, **characterised in that** the radio signal represents information items including irregular or unpredictable characteristics.

4. Use of a computer-based object (1) as claimed in any one of the preceding claims, **characterised in that** the radio signal is received by the reading of a subcarrier wave, associated with a radio transmission.

5. Use of a computer-based object (1) as claimed in any one of the preceding claims, **characterised in that** the signal (3) includes a plurality of defined time periods, the information supplied by this signal being constant or constantly interpretable within each of these defined periods, but varying in an irregular or unpredictable manner from one period to another.

6. Use of at least one computer-based object (1) for the control of pseudo-random data generated by this computer-based object (1) including data processing means, storage means, and also display means or means (21) of communication with a data processing device, referred to as a terminal (2), **characterised in that** this use for the control of the pseudo-random data includes the following steps:
- generation of pseudo-random data, referred to as a signature (13), by use of this computer-based object (1) as claimed in any one of the preceding claims;
- display of this signature (13), or transmission of this signature to the terminal (2), for verification with respect to data (43) calculated by an other apparatus (4), referred to as a control station, on the basis of the same digital or analogue signal (3), wherein this verification can be performed in the terminal (2) or outside it.

7. Use of a computer-based object (1) as claimed in the preceding claim, **characterised in that** it includes a comparison step verifying the value of a data item, referred to as a validity data item (18), stored in the computer-based object (1), wherein this verification conditions or modifies the calculation, the display or the transmission of the signature (13).

8. Use of a computer-based object (1) as claimed in either one of Claims 6 to 7, **characterised in that** it includes a step of displaying, on display means (22) of the terminal (2), the signature (13) received by the terminal from the computer-based object (1).

9. Use of a computer-based object (1) as claimed in any one of Claims 6 to 8, **characterised in that** the signature (13) is calculated by the computer-based object (1) by an algorithm, referred to as a signature algorithm (11) using at least one data item, referred to as a calculation key.

10. Use of a computer-based object (1) as claimed in any one of Claims 6 to 9, **characterised in that** the calculation key is calculated on the basis of a data item, referred to as a base key (12), stored in the computer-based object (1).

11. Use of a computer-based object (1) as claimed in any one of Claims 6 to 10, **characterised in that** several data, referred to as multiple base keys, are stored in the computer-based object (1), this use including a step of input of a data item representing, amongst these multiple base keys, the data item to be used as base key (12).

12. Use of a computer-based object (1) as claimed in any one of Claims 6 to 11, **characterised in that** it includes a step of personalisation of the computer-based object (1) by input of at least one data item, referred to as an individual data item (15), this individual data item being used by the computer-based object in combination with the base key (12) in order to calculate a data item, referred to as a daughter key (121), which will be used as the calculation key.

13. Use of a computer-based object (1) as claimed in any one of Claims 6 to 12, **characterised in that** it includes a step of input and storage in the computer-based object (1) of at least one data item, referred to as an additional parameter (14), the signature algorithm (11) combining this additional parameter with the calculation key (12, 121) and the signal data (32) in order to calculate the signature (13, 130).

14. Use of a computer-based object (1) as claimed in any one of Claims 6 to 13, **characterised in that** it includes a step using an algorithm, referred to as a complementary algorithm (410), performing the extraction of the individual data item which has been used in order to generate a signature, referred to as an individualised signature (130), by comparing this individualised signature with a signature, referred to as a base signature (13), which has been generated by combining the same data except for the said individual data item (15).

15. Use of at least one computer-based object (1) for the authentication of one or more objects (1), or the validity thereof, by the use of these computer-based objects (1) as claimed in any one of the preceding claims, these objects (1) belonging to a pool of objects (1) distributed to users, **characterised in that** this use for the authentication includes the following steps:
- activation in a data processing station, referred to as a control station (4), of a control algorithm (41) reproducing the results of the signature algorithm (11) stored in the objects (1) to be authenticated;
- possible storage, in the control station, of a data item representing the base key (12) stored in the objects to be authenticated, or that of the multiple base keys which must be used as base key;
- possible storage, in the control station, of at least one data item representing the additional parameters (14) which must be stored in the objects (1) to be authenticated;
- for each object to be authenticated using an individual data item, reading or reception originating from the object of a data item (15) representing the individual data item and storage of this individual data item in the control station (4);
- calculation by the control the station (4), with the aid of the algorithm (41) of a data item, referred to as a control signature (43), as a function of the data possibly stored as above;
- reading or reception of the signature (13) calculated by an object (1) to be authenticated and verification of this same signature relative to the last control signature (43) obtained by the control station (4), or with a preceding control signature.

16. Use of at least one computer-based object (1) as claimed in the preceding claim, **characterised in that** the individual data item (15) stored in the computer-based object (1) can only be modified in specified conditions, the use of the object (1) for authentication also including the following steps:
- calculation by the computer-based object (1) and transmission to the terminal (2) of a base signature (13) without use of the individual data item (15);
- calculation by the computer-based object and transmission to the terminal of an individualised signature (130) with use of the individual data item;
- display of these signatures (13, 130), or transmission of these signatures to the terminal (2), for verification with respect to at least one data item (43) calculated by another apparatus (4), on the basis of the same digital or analogue signal (3), wherein this verification can be performed in the terminal (2) or outside it.

17. Use of at least one computer-based object (1) as claimed in either of Claims 15 to 16, **characterised in that** the control station (4) includes a complementary algorithm (410), the use of the object (1) for authentication also including the following steps:
- storage in the control station (4) of an individualised signature (130) provided by the computer-based object (1);
- extraction in the control station, by the complementary algorithm (410), of the individual data item (15) used by the computer-based object (1) in order to generate the individualised signature (130), for comparison with an identification provided or presented by the user, or the computer-based object, or the terminal, or a device or a site including or using this computer-based object.

18. Use of at least one computer-based object (1) for the control of a credit counting operation, **characterised in that** this control includes a use of computer-based objects (1) as claimed in any one of the preceding claims, wherein these computer-based objects, on the one hand, store a balance data item (17), representing a value of available credit and a program (16) including a counting algorithm capable of modifying this balance data item, and, on the other hand, include a validity data item (18) having a defined status when the counting algorithm is activated and the balance data item represents a non-zero credit, this modification of the balance data item being performed as a function of one or more periods of activation of the object, this use for control purposes including the following steps:
- distribution to users of such computer-based objects;
- authentication and control of the validity of one or more of these computer-based objects, with the aid of a control station as claimed in any one of Claims 6 to 16, these computer-based objects being presented by the users or accessible for control.

19. Use of at least one computer-based object (1) as claimed in the preceding claim, **characterised in that** the modification of the balance data item (17) is likewise performed as a function of data representing an individual data item (15) or an additional parameter (14) or a choice of base key (12) or a combination of at least two of these elements.

20. Use of at least one computer-based object (1) for the control of use of a device or a system including or using a computer program, referred to as a protected application, **characterised in that** at least a part of the protected application is executed by means of the use of a computer-based object (1) as claimed in any one of the preceding claims, or uses a program executed in this same computer-based object (1), wherein the calculation of the signature (13) or display thereof by the computer-based object or transmission thereof to the terminal (2) is only performed if the protected application is active.

21. Computer-based object (1) including data processing means, storage means, as well as display means or means for communication with a data processing device, referred to as a terminal (2), **characterised in that** it includes at least one calculation algorithm enabling generation of a psuedo-random data item on the basis of a seed data item generated by an interpretation module (24) on the basis of data provided by the reception of an external signal (3) by the computer-based object (1) or by the terminal (2), this signal (3) varying over time and being transmitted in a defined zone without the need for addressing of the signal nor for information specifically supplied in order to provide this seed data item.

22. System for control of a pool of computer-based objects comprising at least one computer-based object (1) including data processing means, storage means, as well as display means or means for communication with a data processing device, referred to as a terminal (2), **characterised in that** the said computer-based object (1) includes at least one calculation algorithm enabling generation of a psuedo-random data item on the basis of a seed data item generated by an interpretation module (24) on the basis of data provided by the reception of an external signal (3) by the computer-based object (1) or by the terminal (2), this signal (3) varying over time and being transmitted in a defined zone without the need for addressing of the signal nor for information specifically supplied in order to provide this seed data item, the pseudo-random data item permitting the use of the computer-based object (1) as claimed in any one of Claims 6 to 19.

23. System for control of the use of a device or a system including or using a computer program, referred to as a protected application, including at least one computer-based object (1) including data processing means, storage means, as well as display means or means for communication with a data processing device, referred to as a terminal (2), **characterised in that** the said computer-based object (1) includes at least one calculation algorithm enabling generation of a psuedo-random data item on the basis of a seed data item generated by an interpretation module (24) on the basis of data provided by the reception of an external signal (3) by the computer-based object (1) or by the terminal (2), this signal (3) varying over time and being transmitted in a defined zone without the need for addressing of the signal nor for information specifically supplied in order to provide this seed data item, the pseudo-random data item permitting the use of the computer-based object (1) as claimed in any one of Claims 6 to 20.

24. System for control of computer-based objects or for control of use of a device or system as claimed in either of Claims 22 and 23, **characterised in that** it includes several computer-based objects in which the algorithms and data necessary for use thereof are distributed.

25. Use of at least one computer-based object (1) for the control of vehicle parking rights, **characterised in that** the control of these rights implements the use of at least one computer-based object (1) as claimed in any one of Claims 1 to 20 and **in that** the computer-based objects (1) are smart cards, prepaid or credit, of which a balance data item (17) represents a parking time value.

26. Use of at least one computer-based object (1) as claimed in the preceding claim, **characterised in that** at least one additional parameter (14) corresponds to a geographic parking zone or a type of pricing or a combination of the two.

27. Use of at least one computer-based object (1) as claimed in either of Claims 24 and 25, **characterised in that** at least one individual data item (15) corresponds to a data item identifying the computer-based object (1) or a data item identifying a vehicle or a user or a user account, or a combination of these elements.

## Patentansprüche

1. Verwenden wenigstens eines computerisierten Objekts (1) zum Erzeugen eines pseudozufälligen Datenelements, 5 wobei das computerisierte Objekt Datenverarbeitungsmittel, Speichermittel sowie Anzeigemittel oder Mittel zum Kommunizieren mit einer Datenverarbeitungsvorrichtung, Terminal (2) genannt, umfasst, **dadurch gekennzeichnet, dass** die Verwendung zum Erzeugen des pseudozufälligen 10 Datenelements die folgenden Schritte beinhaltet:
- Empfangen wenigstens eines externen Signals (3) durch das computerisierte Objekt (1) oder den Terminal (2), wobei dieses Signal (3) im Laufe der Zeit variiert und in einer bestimmten Zone verbreitet wird, ohne eine 15 Adressierung des Signals oder bestimmte Informationen für diese Verwendung zu benötigen;
- Erzeugen, durch ein Interpretationsmodul (24), von Signaldaten (32) von dem empfangenen externen Signal (3), um ein Datenelement, Seed genannt, ohne differenten Stopp 20 zu liefern;
- Berechnen, durch das computerisierte Objekt (1), mit Hilfe eines in diesem Objekt (1) gespeicherten Algorithmus, des pseudozufälligen digitalen Datenelements, Signatur (13) genannt, von dem genannten Seed-Datenelement. 25

2. Verwendung eines digitalisierten Objekts (1) nach dem vorherigen Anspruch, **dadurch gekennzeichnet, dass** das externe Signal (3) ein Funksignal ist, d.h. eines, das von einem Rundsende-Sender rundgesendete elektromagnetische 30 Wellen nutzt, wobei das Verfahren ferner die folgenden Schritte beinhaltet:
- Empfangen des Funksignals durch das Terminal (2);
- Erzeugen, durch das Interpretationsmodul (24), von Signaldaten (32) aus diesem Funksignal;
- Übertragen dieser Signaldaten (32) zu dem computerisierten Objekt (1).

3. Verwendung eines computerisierten Objekts (1) nach 5 einem der vorherigen Ansprüche, **dadurch gekennzeichnet, dass** das Funksignal unregelmäßige oder nicht vorhersehbare Charakteristiken enthaltende Informationen repräsentiert.

4. Verwendung eines computerisierten Objekts (1) nach 10 einem der vorherigen Ansprüche, **dadurch gekennzeichnet, dass** das Funksignal durch Lesen einer mit einer Rundsendung von Rundfunkwellen assoziierten Subträgerwelle empfangen wird.

5. Verwendung eines computerisierten Objekts (1) nach einem der vorherigen Ansprüche, **dadurch gekennzeichnet, dass** das Signal (3) mehrere bestimmte Zeitperioden umfasst, wobei die von diesem Signal gelieferte Information konstant ist oder auf konstante Weise innerhalb dieser bestimmten 20 Perioden interpretiert werden kann, aber auf unregelmäßige oder nicht vorhersehbare Weise von einer Periode zur anderen variiert.

6. Verwendung eines computerisierten Objekts (1) zum 25 Kontrollieren eines pseudozufälligen Datenelements, das von diesem computerisierten Objekt (1) erzeugt wurde, das Datenverarbeitungsmittel, Speichermittel sowie Anzeigemittel oder Mittel (21) zum Kommunizieren mit einer Datenverarbeitungsvorrichtung, Terminal (2) genannt, 30 umfasst, **dadurch gekennzeichnet, dass** diese Verwendung zum Kontrollieren des pseudozufälligen Datenelements die folgenden Schritte beinhaltet:
- Erzeugen eines pseudozufälligen Datenelements, Signatur (13) genannt, durch Verwenden dieses computerisierten Objekts (1) nach einem der vorherigen Ansprüche;
- Anzeigen dieser Signatur (13) oder Übertragen dieser Signatur zum Terminal (2) zur Überprüfung in Bezug auf ein von einem anderen Gerät (4), Kontrollstation genannt, berechnetes Datenelement (43) von demselben digitalen oder analogen Signal (3), wobei diese Überprüfung in dem oder außerhalb des Terminal(s) (2) erfolgen kann.

7. Verwendung eines computerisierten Objekts (1) nach dem vorherigen Anspruch, **dadurch gekennzeichnet, dass** sie einen Vergleichsschritt beinhaltet, bei dem der Wert eines im computerisierten Objekt (1) gespeicherten Datenelements, Gültigkeitsdatenelement (18) genannt, überprüft wird, wobei diese Überprüfung die Berechnung, Anzeige oder Übertragung der Signatur (13) konditioniert oder modifiziert.

8. Verwendung eines computerisierten Objekts (1) nach einem der Ansprüche 6 bis 7, **dadurch gekennzeichnet, dass** sie einen Schritt des Anzeigens, auf Anzeigemitteln (22) des Terminals (2), der durch das Terminal von dem computerisierten Objekt (1) empfangenen Signatur (13) beinhaltet.

9. Verwendung eines computerisierten Objekts (1) nach einem der Ansprüche 6 bis 8, **dadurch gekennzeichnet, dass** die Signatur (13) von dem computerisierten Objekt (1) mit einem Algorithmus, Signaturalgorithmus (11) genannt, berechnet wird, der wenigstens ein Datenelement verwendet, Berechnungsschlüssel genannt.

10. Verwendung eines computerisierten Objekts (1) nach einem der Ansprüche 6 bis 9, **dadurch gekennzeichnet, dass** der Berechnungsschlüssel anhand eines im computerisierten Objekt (1) gespeicherten Datenelements, Basisschlüssel (12) genannt, berechnet wird.

11. Verwendung eines computerisierten Objekts (1) nach einem der Ansprüche 6 bis 10, **dadurch gekennzeichnet, dass** mehrere Datenelemente, mehrere Basisschlüssel genannt, im computerisierten Objekt (1) gespeichert sind, wobei diese Verwendung einen Schritt des Erfassens eines Datenelements umfasst, das unter diesen mehreren Basisschlüsseln das Datenelement repräsentiert, das als Basisschlüssel (12) zu verwenden ist.

12. Verwendung eines computerisierten Objekts (1) nach einem der Ansprüche 6 bis 11, **dadurch gekennzeichnet, dass** sie einen Schritt des Personalisierens des computerisierten Objekts (1) durch Erfassen von wenigstens einem Datenelement, individuelles Datenelement (15) genannt, beinhaltet, wobei dieses individuelle Datenelement vom computerisierten Objekt in Kombination mit dem Basisschlüssel (12) zum Berechnen eines Datenelements, Tochterschlüssel (121) genannt, verwendet wird, der als Berechnungsschlüssel verwendet wird.

13. Verwendung eines computerisierten Objekts (1) nach einem der Ansprüche 6 bis 12, **dadurch gekennzeichnet, dass** sie einen Schritt des Erfassens und Speicherns von wenigstens einem Datenelement, Zusatzparameter (14) genannt, in dem computerisierten Objekt (1) beinhaltet, wobei der Signaturalgorithmus (11) diesen Zusatzparameter mit dem Berechnungsschlüssel (12, 121) und den Signaldaten (32) zum Berechnen der Signatur (13, 130) kombiniert.

14. Verwendung eines computerisierten Objekts (1) nach einem der Ansprüche 6 bis 13, **dadurch gekennzeichnet, dass** sie einen Schritt beinhaltet, der einen Algorithmus, komplementärer Algorithmus (410) genannt, beinhaltet, der das individuelle Datenelement extrahiert, das zum Erzeugen einer Signatur, individualisierte Signatur (130) genannt, durch Vergleichen dieser individualisierten Signatur mit einer Signatur, Basissignatur (13) genannt, benutzt wurde, die durch Kombinieren derselben Daten mit Ausnahme des genannten individuellen Datenelements (14) erzeugt wurde.

15. Verwendung wenigstens einem computerisierten Objekts (1) zum Authentifizieren von einem oder mehreren Objekten (1), oder deren Gültigkeit, aufgrund der Verwendung dieser computerisierten Objekte (1) nach einem der vorherigen Ansprüche, wobei diese Objekte (1) zu einem Bestand (1) von Objekten gehören, die an Benutzer verteilt werden, **dadurch gekennzeichnet, dass** diese Verwendung zum Authentifizieren die folgenden Schritte beinhaltet:
- Aktivieren, in einer Datenverarbeitungsstation, Kontrollstation (4) genannt, eines Kontrollalgorithmus (41), der die Ergebnisse des in den zu authentifizierenden Objekten (1) gespeicherten Signaturalgorithmus (11) reproduziert;
- eventuelles Speichern, in der Kontrollstation, eines Datenelements, das den in den zu authentifizierenden Objekten gespeicherten Basisschlüssel (12) repräsentiert, oder denjenigen der mehreren Basisschlüssel, der als Basisschlüssel zu verwenden ist;
- eventuelles Speichern, in der Kontrollstation, wenigstens eines Datenelements, das die Zusatzparameter (14) repräsentiert, die in den zu authentifizierenden Objekten (1) zu speichern sind;
- Lesen oder Empfangen, für jedes ein individuelles Datenelement benutzende zu authentifizierende Objekt, eines vom Objekt kommenden, das individuelle Datenelement repräsentierenden Datenelements (15), und Speichern dieses individuellen Datenelements in der Kontrollstation (4);
- Berechnen, durch die Kontrollstation (4), mit Hilfe des Kontrollalgorithmus (41), eines Datenelements, Kontrollsignatur (43) genannt, in Abhängigkeit von den oben eventuell gespeicherten Daten;
- Lesen oder Empfangen der von einem zu authentifizierenden (1) Objekt berechneten Signatur (13) und Überprüfen dieser Signatur in Bezug auf die letzte von der Kontrollstation (4) erhaltene Kontrollsignatur (43) oder mit einer vorherigen Kontrollsignatur.

16. Verwendung wenigstens eines computerisierten Objekts (1) nach dem vorherigen Anspruch, **dadurch gekennzeichnet, dass** das im computerisierten Objekt (1) eventuell gespeicherte Datenelement (15) nur unter bestimmten Bedingungen modifiziert werden kann, wobei die Verwendung des Objekts (1) zur Authentifizierung ferner die folgenden Schritte beinhaltet:
- Berechnen, durch das computerisierte Objekt (1), und Übertragen zum Terminal (2), einer Basissignatur (13) ohne Verwendung des individuellen Datenelements (15);
- Berechnen, durch das computerisierte Objekt, und Übertragen zum Terminal, einer individualisierten Signatur (30) unter Verwendung des individuellen Datenelements;
- Anzeigen dieser Signaturen (13, 130) oder Übertragen dieser Signaturen zum Terminal (2) zur Überprüfung in Bezug auf wenigstens ein von einem anderen Gerät (4) berechnetes Datenelement (43) von demselben digitalen oder analogen Signal (3), wobei diese Überprüfung in dem oder außerhalb des Terminal(s) erfolgen kann.

17. Verwendung wenigstens eines computerisierten Objekts (1) nach einem der Ansprüche 15 bis 16, **dadurch gekennzeichnet, dass** die Kontrollstation (4) einen komplementären Algorithmus (410) umfasst, wobei die Verwendung des Objekts (1) zum Authentifizieren ferner die folgenden Schritte beinhaltet:
- Speichern, in der Kontrollstation (4), einer von dem computerisierten Objekt (1) gelieferten individualisierten Signatur (130);
- Extrahieren in der Kontrollstation, durch den komplementären Algorithmus (410), des vom computerisierten Objekt (1) benutzten individuellen Datenelements (15) zum Erzeugen der individualisierten Signatur (130) zum Vergleichen mit einer Identifikation, die von dem Benutzer oder dem computerisierten Objekt oder dem Terminal oder einer Vorrichtung oder einer dieses computerisierte Objekt enthaltenden oder benutzenden Stelle geliefert oder präsentiert wurde.

18. Verwendung wenigstens eines computerisierten Objekts (1) zum Kontrollieren einer Kreditabrechnung, **dadurch gekennzeichnet, dass** diese Kontrolle die Verwendung von computerisierten Objekten (1) nach den vorherigen Ansprüchen beinhaltet, wobei diese computerisierten Objekte einerseits ein Saldodatenelement (17), das einen verfügbaren Kreditwert repräsentiert, und ein Programm (16) speichern, das einen Abrechnungsalgorithmus enthält, der dieses Saldodatenelement modifizieren kann, und andererseits ein Gültigkeitsdatenelement (18) umfassen, das einen bestimmten Zustand präsentiert, wenn der Abrechnungsalgorithmus aktiviert ist und das Saldodatenelement einen Kredit von ungleich null zeigt, wobei diese Modifikation des Saldodatenelements in Abhängigkeit von einer oder mehreren Aktivierungsdauern des Objekts erfolgt, wobei diese Verwendung zur Kontrolle die folgenden Schritte beinhaltet:
- Verteilen solcher computerisierter Objekte an Benutzer;
- Authentifizieren und Kontrollieren der Gültigkeit von einem oder mehreren dieser computerisierten Objekte mit Hilfe einer Kontrollstation nach einem der Ansprüche 6 bis 16, wobei diese computerisierten Objekte zur Kontrolle von den Benutzern präsentiert werden oder zugängig sind.

19. Verwendung wenigstens eines computerisierten Objekts (1) nach dem vorherigen Anspruch, **dadurch gekennzeichnet, dass** die Modifikation des Saldodatenelements (17) auch in Abhängigkeit von Daten erfolgt, die ein individuelles Datenelement (15) oder einen Zusatzparameter (14) oder eine Basisschlüsselauswahl (12) oder eine Kombination von wenigstens zwei dieser Elemente repräsentieren.

20. Verwendung wenigstens eines computerisierten Objekts (1) zum Kontrollieren der Verwendung einer Vorrichtung oder eines Systems, die/das ein Computerprogramm, geschützte Anwendung genannt, umfasst oder verwendet, **dadurch gekennzeichnet, dass** wenigstens ein Teil der geschützten Anwendung aufgrund der Verwendung eines computerisierten Objekts (1) nach einem der vorherigen Ansprüche ausgeführt wird oder ein in diesem computerisierten Objekt (1) ausgeführtes Programm verwendet, wobei die Berechnung der Signatur (13) oder deren Anzeige durch das computerisierte Objekt oder seine Übertragung zum Terminal (2) nur dann erfolgt, wenn die geschützte Anwendung aktiv ist.

21. Computerisiertes Objekt (1), das Datenverarbeitungsmittel, Speichermittel sowie Anzeigemittel oder Mittel zum Kommunizieren mit einer Datenverarbeitungsvorrichtung, Terminal genannt (2), umfasst, **dadurch gekennzeichnet, dass** es wenigstens einen Rechenalgorithmus umfasst, mit dem ein pseudozufälliges Datenelement von einem Seed-Datenelement erzeugt werden kann, das von einem Interpretationsmodul (24) von Daten erzeugt wird, die durch den Empfang eines externen Signals (3) durch das computerisierte Objekt (1) oder durch den Terminal (2) geliefert wurden, wobei dieses Signal (3) im Laufe der Zeit variiert und in einer bestimmten Zone verbreitet wird, ohne die Adressierung des Signals oder bestimmte Informationen zum Liefern dieses Seed-Datenelements zu benötigen.

22. System zum Kontrollieren eines Bestands von computerisierten Objekten, die wenigstens ein computerisiertes Objekt (1) umfassen, das Datenverarbeitungsmittel, Speichermittel sowie Anzeigemittel und Mittel zum Kommunizieren mit einer Datenverarbeitungsvorrichtung, Terminal (2) genannt, umfasst, **dadurch gekennzeichnet, dass** das genannte computerisierte Objekt (1) wenigstens einen Rechenalgorithmus umfasst, mit dem ein pseudozufälliges Datenelement von einem Seed-Datenelement erzeugt werden kann, das von einem Interpretationsmodul (24) von Daten erzeugt wird, die durch den Empfang eines externen Signals (3) durch das computerisierte Objekt (1) oder durch den Terminal (2) geliefert wurden, wobei dieses Signal (3) im Laufe der Zeit variiert und in einer bestimmten Zone verbreitet wird, ohne die Adressierung des Signals oder bestimmte Informationen zum Liefern dieses Seed-Datenelements zu benötigen, wobei das pseudozufällige Datenelement die Verwendung des computerisierten Objekts (1) nach einem der Ansprüche 6 bis 19 zulässt.

23. System zum Kontrollieren der Verwendung einer Vorrichtung oder eines Systems, die/das ein Computerprogramm, geschützte Anwendung genannt, umfasst oder verwendet, umfassend wenigstens ein computerisiertes Objekt (1), das Datenverarbeitungsmittel, Speichermittel sowie Anzeigemittel oder Mittel zum Kommunizieren mit einer Datenverarbeitungsvorrichtung, Terminal (2) genannt, umfasst, **dadurch gekennzeichnet, dass** das genannte computerisierte Objekt (1) wenigstens einen Rechenalgorithmus umfasst, mit dem ein pseudozufälliges Datenelement von einem Seed-Datenelement erzeugt werden kann, das von einem Interpretationsmodul (24) von Daten erzeugt wird, die durch den Empfang eines externen Signals (3) durch das computerisierte Objekt (1) oder durch den Terminal (2) geliefert wurden, wobei dieses Signal (3) im Laufe der Zeit variiert und in einer bestimmten Zone verbreitet wird, ohne die Adressierung des Signals oder bestimmte Informationen zum Liefern dieses Seed-Datenelements zu benötigen, wobei das pseudozufällige Datenelement die Verwendung des computerisierten Objekts (1) nach Anspruch 20 zulässt.

24. System zum Kontrollieren von computerisierten Objekten oder zum Kontrollieren der Verwendung einer Vorrichtung oder eines Systems nach einem der Ansprüche 22 und 23, **dadurch gekennzeichnet, dass** es mehrere computerisierte Objekte umfasst, in denen die Algorithmen und Daten verteilt sind, die für deren Benutzung benötigt werden.

25. Verwendung wenigstens eines computerisierten Objekts (1) zum Kontrollieren von Parkberechtigungen für Fahrzeuge, **dadurch gekennzeichnet, dass** für die Kontrolle dieser Berechtigungen wenigstens ein computerisiertes Objekt (1) nach einem der Ansprüche 1 bis 20 verwendet wird, und dadurch, dass die computerisierten Objekte (1) Chipkarten sind, vorausbezahlt oder mit Kredit, von denen ein Saldodatenelement (17) einen Parkzeitwert repräsentiert.

26. Verwendung wenigstens eines computerisierten Objekts (1) nach dem vorherigen Anspruch, **dadurch gekennzeichnet, dass** wenigstens ein Zusatzparameter (14) einer geografischen Parkzone oder einem Gebührenfestsetzungstyp oder einer Kombination von beiden entspricht.

27. Verwendung wenigstens eines computerisierten Objekts (1) nach einem der Ansprüche 24 und 25, **dadurch gekennzeichnet, dass** wenigstens ein individuelles Datenelement (15) einem Datenelement, das das computerisierte Objekt (1) identifiziert, oder einem Datenelement entspricht, das ein Fahrzeug oder einen Benutzer oder ein Benutzerkonto oder eine Kombination dieser Elemente identifiziert.
